# EUROPÄISCHE PATENTSCHRIFT

(11) **EP 4 225 476 B1**
(45) Veröffentlichungstag und Bekanntmachung des Hinweises auf die Patenterteilung: **03.12.2025**
(21) Anmeldenummer: 21785924.8
(22) Anmeldetag: 07.10.2021
(51) Int. Cl.: B01D 65/00, B01D 35/147, B01D 35/153, B01D 35/30, G01N 30/60

(54) **MODULARE VORRICHTUNG ZUM FESTEN ANORDNEN UND VERSCHALTEN EINZELNER SEPARATIONSEINHEITEN UND/ODER FUNKTIONSEINHEITEN UNTEREINANDER**
MODULAR DEVICE FOR FIXEDLY ARRANGING AND INTERCONNECTING INDIVIDUAL SEPARATION UNITS AND/OR FUNCTION UNITS AMONGST ONE ANOTHER
DISPOSITIF MODULAIRE POUR AGENCER ET INTERCONNECTER DE MANIÈRE FIXE DES UNITÉS DE SÉPARATION INDIVIDUELLES ET/OU DES UNITÉS FONCTIONNELLES L'UNE AVEC L'AUTRE

(30) Priorität: 08.10.2020 EP 20200819
(43) Veröffentlichungstag der Anmeldung: 16.08.2023
(60) Teilanmeldung: 25208815.8
(73) Patentinhaber: Sartorius Stedim Biotech GmbH, 37079 Göttingen (DE)
(72) Erfinder: HANDT, Sebastian, 37079 Göttingen (DE); MIETH, Florian, 37079 Göttingen (DE); HEISE, Heino, 37079 Göttingen (DE); BECKER, Lukas, 37079 Göttingen (DE); DIPPEL, Jannik, 37079 Göttingen (DE)
(74) Vertreter: Novagraaf International SA
(86) Internationale Anmeldenummer: PCT/EP2021/077775
(87) Internationale Veröffentlichungsnummer: WO 2022/074151

(56) Entgegenhaltungen:
- EP-A1- 2 952 791
- WO-A1-91/16124
- US-A- 5 753 107

## Beschreibung

Die Erfindung betrifft eine modulare Vorrichtung zum festen Anordnen und Verschalten einzelner Separationseinheiten und/oder Funktionseinheiten untereinander für die Durchführung einer oder mehrerer Grundoperationen in einem bioverfahrenstechnischen Prozess. Die Erfindung betrifft ferner eine Prozess-Vorrichtungsanordnung für die Durchführung einer oder mehrerer Grundoperationen in einem bioverfahrenstechnischen Prozess.

Im Bereich der Aufreinigung (Downstream-Prozess) werden Separationseinheiten wie etwa Filtercapsulen, Chromatographiesäulen oder Membranadsorber eingesetzt. Derzeit werden solche Separationseinheiten und ggf. weitere Funktionseinheiten (Sensoren, Pumpen, Mischer etc.) mithilfe von Schläuchen und/ oder Verrohrungen untereinander verschaltet, um einen bestimmten Prozessschritt durchführen zu können.

Eine solche herkömmliche Prozessanordnung benötigt viel Platz und ist sehr unhandlich, auch weil viele Komponenten der Anordnung fixiert werden müssen. Außerdem weist eine solche Anordnung große Toträume auf, was zum einen die Gefahr einer unerwünschten Rückvermischung birgt und zum anderen einer gewünschten maximalen Produktausbeute entgegensteht. Dies ist insbesondere bei der Herstellung von hochwertigen biopharmazeutischen Wirkstoffen von Bedeutung. Ein weiterer Nachteil einer herkömmlichen Prozessanordnung ist, dass vor der Durchführung weiterer Separationsschritte im Downstream-Prozess das aufzureinigende Medium jeweils umständlich zwischengelagert werden muss, z. B. in einem separaten Tank oder in Beuteln, da es aktuell an der Kompatibilität der Schnittstellen dieser Zwischenschritte mangelt (druckanfällig, keine Sterilbarriere, keine passenden Anschlüsse, etc.).

Aus WO 91/16124 A1 ist eine Vorrichtung mit den Merkmalen des Oberbegriffs des Anspruchs 1 bekannt. Eine Filterpatronenbaugruppe umfasst eine austauschbare längliche Filterpatrone mit einem kopfseitigen Verteiler. Der Verteiler weist einen Filtratauslassdurchgang auf, der vollständig in einem Einlassdurchgang liegt, wobei der Filtratauslassdurchgang verhindert, dass sich Flüssigkeit in dem Filtratauslassdurchgang mit Flüssigkeit in dem Einlassdurchgang vermischt. Des Weiteren weist der Verteiler einen Durchlass zum Filtratauslassdurchgang auf, der mittels eines in einem Absperrdurchgang aufgenommenen Absperrschiebers und einer Dichtung verschlossen werden kann. Ein Stopfen am oberen Ende des Verteilers verschließt den Sperrdurchgang. Mehrere Filterpatronen können mithilfe von Verbindungsstangen miteinander zu einer Reihe verbunden werden. In einer speziellen Ausgestaltung kann der Stopfen nicht wiedereingesetzt werden, wenn sich der Absperrschieber in einer oberen Position befindet. Dadurch wird eine Sichtanzeige dafür bereitgestellt, dass die zugehörige Filterpatrone von der Flüssigkeitszufuhr abgeschnitten ist.

EP 2 952 791 A1 zeigt ein Filtersystem zur Kraftstofffilterung eines Bootsmotors mit mehreren Filterbaugruppen, die jeweils ein Verteilermodul aufweisen. Das Verteilermodul umfasst einen Abschnitt einer Unflitrat-Zufuhrleitung, einen Abschnitt einer Filtrat-Auslassleitung und einen Ventildurchgang, der den Abschnitt der Zufuhrleitung fluidtechnisch mit dem Abschnitt der Auslassleitung verbindet. Ein durch den Ventildurchgang aufgenommenes röhrenförmiges Ventilglied ist zwischen einer offenen Position und einer geschlossenen Position beweglich, um unterschiedliche Fluidströme zu realisieren. Mehrere Filterbaugruppen können mittels der Verteilermodule in Serie geschaltet werden.

US 5 753 107 A beschreibt ein Wasserreinigungs- und Filtersystem auf Kartuschenbasis, das einen Kartuschenwechsel ohne Entleerung an den Ein-und Auslassöffnungen ermöglicht. Die Verteilerkappen einer Filterkartusche und einer Reinigungskartusche können durch einen mit O-Ringen abgedichteten Konnektor miteinander verbunden werden.

Aufgabe der Erfindung ist es, die Durchführung einer oder mehrerer Grundoperationen in einem bioverfahrenstechnischen Prozess, insbesondere in einem Downstream-Prozess, einfacher und flexibler zu gestalten.

Gelöst wird diese Aufgabe durch eine modulare Vorrichtung mit den Merkmalen des Anspruchs 1. Vorteilhafte und zweckmäßige Ausgestaltungen der erfindungsgemäßen modularen Vorrichtung sind in den Unteransprüchen angegeben.

Die erfindungsgemäße modulare Vorrichtung dient zum festen Anordnen und Verschalten einzelner Separationseinheiten und/oder erster Funktionseinheiten untereinander für die Durchführung einer oder mehrerer Grundoperationen in einem bioverfahrenstechnischen Prozess. Die modulare Vorrichtung umfasst mehrere Verteilerkappen, von denen wenigstens eine Verteilerkappe zum Anbringen an einer Separationseinheit und eine oder mehrere weitere Verteilerkappen jeweils zum Anbringen an einer weiteren Separationseinheit oder einer ersten Funktionseinheit vorgesehen sind. Die Verteilerkappen weisen jeweils Folgendes auf:
- eine Fluidverteilereinrichtung mit einem Arbeitsanschluss und wenigstens zwei Zuführ- oder Abführanschlüssen, wobei die Fluidverteilereinrichtung wenigstens zwei definierte Schaltstellungen einnehmen kann;
- Anschlussmittel zum Herstellen einer Strömungsverbindung zwischen einem Fluideinlass oder -auslass der Separationseinheit oder ersten Funktionseinheit und dem Arbeitsanschluss der Fluidverteilereinrichtung; und
- ein Interface zum manuellen oder automatisierten Wechseln der Schaltstellungen der Fluidverteilereinrichtung.

Gemäß der Erfindung weisen die Verteilerkappen ferner Verbindungsmittel auf, die sowohl einer starre mechanische Verbindung als auch eine Strömungsverbindung mit einer benachbarten Verteilerkappe herstellen.

Unter Separationseinheiten sind hier Filtercapsulen, Chromatographiesäulen, Membranadsorber oder ähnliche Einheiten zu verstehen, die typischerweise in einem Downstream-Prozess zur Abtrennung von biopharmazeutischen Produkten verwendet werden. Davon zu unterscheiden sind andere Funktionseinheiten, hier als erste Funktionseinheiten bezeichnet, die anderen Zwecken im Rahmen der Prozessdurchführung bzw. -steuerung dienen. Eine solche erste Funktionseinheit kann z. B. ein Pumpen(kopf), ein(e) Sensor(anordnung), ein statischer Mischer, ein Reservoir bzw. Zwischenspeicher, eine Probeentnahmeeinrichtung oder eine Entlüftungseinrichtung sein, wobei die erste Funktionseinheit auch nur funktionswesentliche Teile solcher Einheiten aufweisen kann. Eine erste Funktionseinheit kann auch einfach nur ein z. B. als Bypass genutztes Leerrohr zum Transport von Medium sein.

Die Verteilerkappen sind in erster Linie zum Anbringen an Separationseinheiten vorgesehen, die wiederum für die Durchführung der jeweiligen Grundoperation im bioverfahrenstechnischen Prozess vorgesehen sind. Die Anschlussmittel der Verteilerkappen stellen eine Strömungsverbindung zwischen einem Fluideinlass oder -auslass der Separationseinheit und dem Arbeitsanschluss der Fluidverteilereinrichtung her. Die Anschlussmittel der Verteilerkappen erlauben aber auch deren Anbringen an anderen (ersten) Funktionseinheiten. In diesem Fall stellen die Anschlussmittel der Verteilerkappen eine Strömungsverbindung zwischen einem Fluideinlass oder -auslass der ersten Funktionseinheit und dem Arbeitsanschluss der Fluidverteilereinrichtung her

Das bedeutet, dass für die Durchführung der gewünschten Grundoperation(en) auf jeden Fall wenigstens eine, vorzugsweise mehrere Separationseinheiten mit einer Verteilerkappe versehen sind, und ggf. noch weitere erste Funktionseinheiten ebenfalls mittels solcher Verteilerkappen zu einer Prozess-Vorrichtungsanordnung verschaltet sind.

Dabei ist jede Verteilerkappe über ihre Verbindungsmittel (die von den zuvor genannten Anschlussmitteln zu unterscheiden sind) mit wenigstens einer weiteren benachbarten Verteilerkappe verbunden. Eine solche Verbindung bedeutet sowohl eine starre mechanische Verbindung als auch eine Strömungsverbindung mit der benachbarten Verteilerkappe, gemäß der Erfindung zwischen einem Zuführ- oder Abführanschluss der Fluidverteilereinrichtung der einen Verteilerkappe mit einem Zuführ- oder Abführanschluss der der Fluidverteilereinrichtung der benachbarten Verteilerkappe.

Die Zuführ- bzw. Abführanschlüsse der Fluidverteilereinrichtungen der Verteilerkappen sind gemäß der Erfindung sowohl zum Zuführen als auch zum Abführen von Fluid geeignet. Die tatsächliche Funktion jedes einzelnen Anschlusses ergibt sich aus der endgültigen Verschaltung der Verteilerkappen mit den zugehörigen Separationseinheiten bzw. ersten Funktionseinheiten in der konkreten Anwendung.

Die erfindungsgemäße Vorrichtung kann darüber hinaus noch weitere Verteilerkappen umfassen, die nicht über ihre Anschlussmittel an einer Separationseinheit oder einer ersten Funktionseinheit angebracht sind, sondern nur über ihre Verbindungsmittel mit wenigstens einer anderen Verteilerkappe verbunden sind. Insbesondere solche Verteilerkappen können an ihren freien Seiten über weitere Verbindungsmittel mit zweiten Funktionseinheiten verbunden sein, wie etwa einem Sensor, einer Probeentnahmeeinrichtung oder einer Entlüftungseinrichtung. Solche zweiten Funktionseinheiten, die nicht mit dem Arbeitsanschluss, sondern einem Zuführ- oder Abführanschluss der Verteilerkappe verbunden sind, sind in der Regel kleiner und/oder leichter als die zuvor beschriebenen ersten Funktionseinheiten, die zur Verbindung mit dem Arbeitsanschluss der Verteilerkappe vorgesehen sind. Selbstverständlich kann eine Verteilerkappe sowohl mit einer ersten Funktionseinheit und zusätzlich mit einer oder mehreren zweiten Funktionseinheiten verbunden sein.

Besonders hervorzuheben ist der modulare Charakter der erfindungsgemäßen Vorrichtung. Die Verteilerkappen erlauben unterschiedliche Verschaltungen der angeschlossenen Separationseinheiten und ggf. ersten Funktionseinheiten, sodass individuell konfigurierbare Prozess-Vorrichtungsanordnungen ermöglicht werden. Durch entsprechend geschaltete Fluidverteilereinrichtungen kann ein serieller oder paralleler Betrieb der Separationseinheiten und ggf. ersten Funktionseinheiten realisiert werden.

Seriell verschaltete Separationseinheiten ermöglichen insbesondere die sequentielle, unterbrechungsfreie Ausführung verschiedener Teilschritte, z. B. Vorfiltration und Sterilfiltration, Chromatographie, Clarification, Ultrafiltration/Diafiltration, Verdünnung und Konditionierung (pH-Einstellung etc.), Virusfiltration und Virusinaktivierung sowie Tiefenfiltration. Ein Zwischenlagern von Medium in Behältern wird dadurch deutlich reduziert oder sogar überflüssig, sodass weniger Produktionsfläche im Labor benötigt wird. Eine parallele Verschaltung mehrerer gleichartiger Separationseinheiten führt zu einer Steigerung der Kapazität und/oder der Durchflussleistung. Sinnvoll kann auch eine Kombination von serieller und paralleler Verschaltung sein, sodass bestimmte serielle Schritte eine Kapazitätserweiterung aufweisen. Auch andere verzweigte Konfigurationen mit unterschiedlichen Betriebsarten innerhalb einer Anordnung sind möglich, wie etwa eine Einbindung einer Verweilschleife zur Gewährleistung einer Verweilzeit in einem Modul.

Über das Interface kann die für die jeweilige Betriebsart benötigte Schaltstellung der Fluidverteilereinrichtung jeder Verteilerkappe manuell oder auch (teil-) automatisiert eingestellt werden.

Unabhängig von der gewählten Verschaltung der Verteilerkappen mit den zugehörigen Separationseinheiten und ggf. ersten Funktionseinheiten bilden alle Verteilerkappen zusammen aufgrund der starren mechanischen Verbindungen untereinander einen kompakten und stabilen Verbund, sodass die gesamte Anordnung (einschließlich der Separationseinheiten und ggf. ersten Funktionseinheiten) eine vormontierte Einheit darstellt, die als Ganzes transportiert, aufgestellt und in Betrieb genommen werden kann. Die Vormontage kann bereits beim Hersteller erfolgen, sodass etwaige Fehler auf Seiten des Anwenders ausgeschlossen werden können.

Der Zusammenbau zu einem kompakten und stabilen Verbund erweist sich als besonders vorteilhaft, wenn die Anordnung aus Einweg-Komponenten besteht und für einen einmaligen Gebrauch bestimmt ist, da die Anordnung nach dem Gebrauch dann auch als Ganzes entsorgt werden kann. Das bedeutet, dass die Komponenten vor dem Entsorgen nicht separiert werden müssen, damit sie in die vorgesehenen Behältnisse passen, sondern sie können als kompakte Einheit abtransportiert und zusammen entsorgt werden. Gegebenenfalls kann auch eine (teilweise) Separation der Komponenten vor der Entsorgung vorgesehen sein, insbesondere an vorher definierten Demontage-Stellen.

Ein weiterer wesentlicher Vorteil der erfindungsgemäßen Vorrichtung besteht darin, dass zur Herstellung der benötigten Strömungsverbindungen zwischen den Separationseinheiten und ggf. ersten Funktionseinheiten keine zusätzlichen Schläuche oder Rohre und zwischengeschaltete Ventile erforderlich sind. Abgesehen davon, dass solche Verbindungen viel Platz benötigen, ist das Anschließen der Schläuche oder Rohre an die Separationseinheiten und die Ventile grundsätzlich fehleranfällig und birgt zudem die Gefahr einer Verunreinigung. Bei der erfindungsgemäßen Vorrichtung werden die Strömungsverbindungen hingegen ohne zusätzlichen Platzbedarf direkt über die Verbindungsmittel und die Fluidverteilereinrichtungen der Verteilerkappen realisiert. Dadurch wird eine kompakte Anordnung der Verteilerkappen - vorzugsweise in einer Ebene - erreicht, bei der sowohl die Toträume als auch die Leckagemöglichkeiten minimiert sind. Letzteres ist insbesondere im Hinblick auf die begrenzte Druckstabilität von Schläuchen von Bedeutung. Die mithilfe der Verbindungsmittel hergestellten Strömungsverbindungen sind kurz und starr und können dementsprechend viel stabiler ausgelegt werden.

Durch die vorgegebenen, geschützten (d. h. nicht exponierten) Verbindungen der Verteilerkappen untereinander und den Entfall eines Zwischenlagerns von Medium ist im Vergleich zu bisherigen Prozessanordnungen vor, während und nach dem Betrieb für eine deutlich erhöhte Sicherheit gesorgt, auch im Hinblick auf die Produktsterilität.

Die Verteilerkappen der erfindungsgemäßen Vorrichtung werden bevorzugt an einem (stirnseitigen) Ende eines Gehäuses einer Separationseinheit oder ersten Funktionseinheit befestigt, damit die Separationseinheit oder erste Funktionseinheit und die zugehörige Verteilerkappe einen festen Verbund bilden. Deshalb umfassen die Verteilerkappen neben den Anschlussmitteln zum Herstellen der erforderlichen Strömungsverbindung zwischen dem Arbeitsanschluss der Fluidverteilereinrichtung der Verteilerkappe und dem Fluideinlass oder -auslass der Separationseinheit oder ersten Funktionseinheit vorzugsweise auch Montagemittel zum festen Anbringen der Verteilerkappe an einem solchen Gehäuseende.

Eine besondere Flexibilität der erfindungsgemäßen Vorrichtung ergibt sich dadurch, dass alle oder zumindest eine Menge der Verteilerkappen im Wesentlichen die gleiche Form und die gleiche Größe haben und die Zuführ- oder Abführ-Anschlüsse, soweit vorhanden, jeweils an der gleichen Stelle angeordnet sind. Auch die Montagemittel zum festen Anbringen der Verteilerkappe sind vorzugsweise einheitlich ausgebildet. Somit stellen die Verteilerkappen einen Kompatibilitätsstandard dar, der nicht nur vielfältige Einsatzmöglichkeiten bietet (einfach konfigurierbare Verschaltung von Separationseinheiten und ggf. ersten Funktionseinheiten). Die gewünschten Anordnungen sind zudem leicht im Voraus planbar, da die einzelnen, gleich ausgebildeten Verteilerkappen mit ihren zugeordneten Separationseinheiten und ggf. ersten Funktionseinheiten nahezu beliebig zusammengesetzt werden können, ohne dabei auf individuelles Anschlusszubehör achten zu müssen.

Besonders bevorzugt ist eine Gestaltung der Verteilerkappen, bei der die Zuführ- oder Abführanschlüsse der Fluidverteilereinrichtung in einer Ebene liegen, die vorzugsweise senkrecht zu einer axialen Richtung des Arbeitsanschlusses orientiert ist. Ein solches Design ist optimal abgestimmt auf Separationseinheiten, deren Fluideinlass oder -auslass an einem stirnseitigen Ende angeordnet ist. Die Verteilerkappe wird dann wie ein (zusätzlicher) Deckel auf dieses Ende aufgesetzt. Dabei wird der Arbeitsanschluss der Fluidverteilereinrichtung der Verteilerkappe mit dem Fluideinlass oder -auslass der Separationseinheit verbunden. Die Zuführ- oder Abführanschlüsse der Fluidverteilereinrichtung der Verteilerkappe stehen dann an den hierzu senkrechten freien Seiten der Verteilerkappe zur Verfügung. Da die Zuführ- oder Abführanschlüsse der Verteilerkappe alle in derselben Ebene liegen, ergibt die Verbindung mehrerer Verteilerkappen einen einfach zu handhabenden ebenen (nicht abgestuften) Verbund.

Bei der bevorzugten Ausführungsform der Erfindung weist die Fluidverteilereinrichtung der Verteilerkappe vier Zuführ- oder Abführanschlüsse auf, die in Winkelabständen von 90° angeordnet sind. Die Verbindung der Verteilerkappen ergibt dann einfache, vorhersehbare Muster.

Im Hinblick auf eine besonders platzsparende und flexible relative Anordnungsmöglichkeiten der miteinander zu verbindenden Verteilerkappen empfiehlt sich für die Verteilerkappen als Grundform die eines geraden Zylinders, was gemäß der mathematischen Definition gerade Prismen einschließt. Dementsprechend ist die Grund- und Deckfläche der Verteilerkappen im Wesentlichen kreisförmig oder ein gleichwinkliges Polygon, vorzugsweise ein Oktagon.

Die Fluidverteilereinrichtung der Verteilerkappe stellt grundsätzlich Strömungsverbindungen zwischen dem Arbeitsanschluss, der zur Verbindung mit dem Fluideinlass oder -auslass einer Separationseinheit oder ersten Funktionseinheit vorgesehen ist, und allen vorhandenen Zuführ- oder Abführanschlüssen bereit, die jeweils entweder mit einem Zuführ- oder Abführanschluss einer benachbarten Verteilerkappe oder einer zweiten Funktionseinheit verbunden werden können. Die wenigstens zwei Schaltstellungen der Fluidverteilereinrichtung ermöglichen je nach Ausführung:
- die selektive Freigabe bzw. Sperrung einer Strömungsverbindung zwischen dem Arbeitsanschluss und wenigstens einem Zuführ- oder Abführanschluss; und/oder
- die selektive Freigabe bzw. Sperrung von Strömungsverbindungen zwischen dem Arbeitsanschluss und mehreren bestimmten oder allen Zuführ- oder Abführanschlüssen.

Hierfür weist die Fluidverteilereinrichtung gemäß der Erfindung wenigstens ein Ventil auf, vorzugsweise ein Kugelventil und/oder ein Membranventil.

Das Ventil ist gemäß der Erfindung ein Mehrwegeventil mit mehreren Ventilstellungen sein, mit dem unterschiedliche Strömungsverbindungen zwischen dem Arbeitsanschluss und den Zuführ- oder Abführanschlüssen und/oder zwischen den Zuführ- oder Abführanschlüssen untereinander einstellbar sind, wobei der Arbeitsanschluss vorzugsweise bezüglich einer zu seiner axialen Richtung senkrechten Ebene mittig in der Verteilerkappe angeordnet ist.

Bei bestimmten Separationseinheiten, insbesondere bei bestimmten Filtercapsulen- oder Membranadsorbertypen, sind der Fluideinlass und der Fluidauslass beide auf derselben Stirnseite angeordnet (in der Betriebsstellung unten). Typischerweise ist bezüglich der Mittelachse dieser im Wesentlichen zylindrisch geformten Separationseinheiten der Fluidauslass mittig und der Fluideinlass radial versetzt dazu angeordnet. Für diesen Typ von Separationseinheiten, der nachfolgend der Einfachheit halber als T-Style-Variante bezeichnet wird, sieht die Erfindung eine Verteilerkappe vor, bei der der Arbeitsanschluss so angeordnet ist, dass er bezüglich des mittigen Fluidauslasses der Separationseinheit radial versetzt angeordnet ist, so dass beim Anbringen der Verteilerkappe an der Separationseinheit der Arbeitsanschluss mit dem entsprechend versetzt angeordneten Fluideinlass der Separationseinheit in Strömungsverbindung gebracht wird. Der mittige Fluidauslass der Separationseinheit wird mittels der Fluidverteilereinrichtung in Strömungsverbindung mit einem oder mehreren Abführanschlüssen der Verteilerkappe gebracht.

Im Einklang mit dem grundlegenden Erfindungsgedanken ist es auch möglich, die oben beschriebene T-Style-Variante der Verteilerkappe nicht mit einer Separationseinheit, sondern mit einer ersten Funktionseinheit, z. B. einer Sensoranordnung, zu kombinieren. In diesem Fall ist der Arbeitsanschluss der Verteilerkappe an den Fluideinlass der ersten Funktionseinheit und ein Zuführ- oder Abführanschluss der Verteilerkappe an den Fluidauslass der ersten Funktionseinheit angeschlossen, oder umgekehrt.

Für die T-Style-Variante der Verteilerkappe eignet sich als Ventil in der Fluidverteilereinrichtung ein Kugelventil, das über ein mittig angeordnetes Betätigungselement und ein Kegelradgetriebe in wenigstens zwei verschiedene Ventilstellungen gebracht werden kann. Alternativ kann hier auch ein Membranventil verwendet werden.

An den Zuführ- oder Abführanschlüssen der Fluidverteilereinrichtung der Verteilerkappe sind gemäß der Erfindung geeignete, als Verbindungsmittel dienende Konnektoren, vorzugsweise Sterilkonnektoren, oder Schlauchtüllen oder Blindstopfen angebracht, die vorzugsweise jeweils mit einem Sicherungselement fixiert sind, welches weiter vorzugsweise an einem an einem Gehäuse der Verteilerkappe gebildeten Rastmittel einschnappt.

Wie bereits erwähnt kann wenigstens bei einer Verteilerkappe an wenigstens einen der Zuführ- oder Abführanschlüsse eine zweite Funktionseinheit angeschlossen sein, wie etwa ein Sensor, eine Probeentnahmeeinrichtung oder eine Entlüftungseinrichtung. (Das Anschließen einer solchen "zweiten" Funktionseinheit setzt nicht voraus, dass zwingend auch eine erste Funktionseinheit an den Arbeitsanschluss der Verteilerkappe angeschlossen sein muss.) Falls eine zweite Funktionseinheit vorgesehen ist, werden die jeweiligen Verbindungsmittel der Verteilerkappe zum Herstellen einer starren mechanischen Verbindung und einer Strömungsverbindung mit der zweiten Funktionseinheit genutzt. Somit sind auch die zweiten Funktionseinheiten Teil des insgesamt starren Verbunds der Verteilerkappen.

Als Schutzmaßnahme kann an wenigstens einem Arbeitsanschluss oder Zuführ- oder Abführanschluss ein Überdruckschutzmittel, insbesondere ein Überdruckventil oder eine Berstmembran angebracht sein.

Die Erfindung schafft auch eine Prozess-Vorrichtungsanordnung für die Durchführung einer oder mehrerer Grundoperationen in einem bioverfahrenstechnischen Prozess mit wenigstens einer Separationseinheit und wenigstens einer weiteren Separationseinheit und/oder einer ersten Funktionseinheit. Die erfindungsgemäße Prozess-Vorrichtungsanordnung umfasst ferner eine modulare Vorrichtung, wie sie oben definiert wurde, mit welcher die Separationseinheit und die weitere Separationseinheit und/oder erste Funktionseinheit relativ zueinander fest angeordnet und untereinander verschaltet sind. Dank des modularen Charakters der Verteilerkappen und deren einstellbaren Fluidverteilereinrichtungen besteht die Möglichkeit, die Separationseinheiten parallel oder in Serie zu schalten. Auch komplexere Anordnungen mit parallel und/oder seriell geschalteten Zweigen sind möglich.

Die erfindungsgemäße Prozess-Vorrichtungsanordnung kann vorteilhaft zur Aufteilung eines großen Mediumvolumens auf mehrere kleine Behälter (Subvolumina) genutzt werden. Hierfür ist unter anderem vorgesehen, dass mehrere Zuführ- oder Abführanschlüsse verschiedener Verteilerkappen mit einzelnen Behältern verbunden sind.

Insbesondere im Hinblick auf eine At-line-Analytik während des laufenden Prozesses kann vorgesehen sein, dass ein Zuführ- oder Abführanschluss einer Verteilerkappe oder eine erste Funktionseinheit mit einer Analysemetrik verbunden ist.

Um den Footprint der erfindungsgemäßen Prozess-Vorrichtungsanordnung zu reduzieren, können mehrere Untereinheiten mit jeweils einer Separationseinheit oder ersten Funktionseinheit und wenigstens einer Verteilerkappe zu Modulbaugruppen zusammengefasst werden. Diese Modulbaugruppen lassen sich dann übereinander stapeln.

Strömungsverbindungen zwischen den Modulbaugruppen lassen sich einfach über Verbindungsleitungen herstellen, die an freien seitlichen Zuführ- oder Abführanschlüssen der Verteilerkappen angeschlossen sind.

Insbesondere zur Parallelschaltung von verketteten Separationseinheiten können Strömungsverbindungen zwischen den übereinander gestapelten Modulbaugruppen auch durch vertikal ausgerichtete, den Arbeitsanschlüssen gegenüberliegende Verbindungsanschlüsse der Fluidverteilereinrichtungen der Verteilerkappen hergestellt werden.

Die aktuellen Trends in der biopharmazeutischen Industrie weisen verstärkt in die Richtung der Verwendung von Einweg-Komponenten. Diese werden inzwischen nicht mehr nur im Bereich der Produkt- und Prozessentwicklung eingesetzt, sondern auch im Bereich der klinischen Prüfmusterherstellung (Clinical Trial Manufacturing, CTM) für das Zulassungsverfahren und sogar in der kommerziellen "Guten Herstellungspraxis" (Good Manufacturing Practice, GMP) bei der Produktion von Arzneimitteln. Deshalb ist eine Ausführungsform der erfindungsgemäßen Prozess-Vorrichtungsanordnung bevorzugt, bei der sowohl die Verteilerkappen als auch alle an den Verteilerkappen angebrachten Einheiten der Prozess-Vorrichtungsanordnung als Einweg-Komponenten konfiguriert sind und vorzugsweise die gesamte Prozess-Vorrichtungsanordnung vor Inbetriebnahme vorsterilisiert ist, sodass sie sofort einsatzbereit ist.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine erfindungsgemäße Prozess-Vorrichtungsanordnung für die Durchführung einer oder mehrerer Grundoperationen in einem bioverfahrenstechnischen Prozess mit einer erfindungsgemäßen modularen Vorrichtung zum festen Anordnen und Verschalten einzelner Separationseinheiten und/oder ersten Funktionseinheiten untereinander;
- Figur 2 eine andere Ansicht der Prozess-Vorrichtungsanordnung aus Figur 1;
- Figur 3 eine Untereinheit (Modul) der Prozess-Vorrichtungsanordnung aus Figur 1;
- Figur 4 eine Explosionsansicht einer Verteilerkappe gemäß einer ersten Ausführungsform;
- Figur 5 eine teilweise geschnittene Ansicht der Verteilerkappe aus Figur 4 mit eingesetztem Konnektor und Blindstopfen;
- Figur 6 einzelne Komponenten einer Fluidverteilereinrichtung;
- Figur 7 verschiedene Konnektoren und einen Blindstopfen;
- Figur 8 einen Verbund von Verteilerkappen;
- Figur 9 ein Gestell zur Aufnahme einer erfindungsgemäßen Prozess-Vorrichtungsanordnung;
- Figur 10 eine Schnittansicht einer Verteilerkappe gemäß einer zweiten Ausführungsform;
- Figur 11 eine zweite Funktionseinheit in Form eines Sensors;
- Figur 12 eine zweite Funktionseinheit in Form einer Entlüftungseinheit;
- Figur 13 eine erfindungsgemäße Prozess-Vorrichtungsanordnung mit einer über eine Schlauchleitung angeschlossenen Entlüftungseinheit;
- Figur 14 eine Untereinheit (Modul) einer erfindungsgemäßen Prozess-Vorrichtungsanordnung mit einer ersten Funktionseinheit in Form einer Sensoranordnung anstelle einer Separationseinheit;
- Figur 15 eine erfindungsgemäße Prozess-Vorrichtungsanordnung mit der Untereinheit (Modul) aus Figur 14;
- Figur 16 eine schematische Darstellung einer erfindungsgemäßen Prozess-Vorrichtungsanordnung zur Aufteilung eines großen Mediumvolumens;
- Figur 17 eine Variante einer erfindungsgemäßen Prozess-Vorrichtungsanordnung zur Aufteilung eines großen Mediumvolumens; und
- Figur 18 eine schematische Darstellung einer platzsparend aufgebauten erfindungsgemäßen Prozess-Vorrichtungsanordnung.

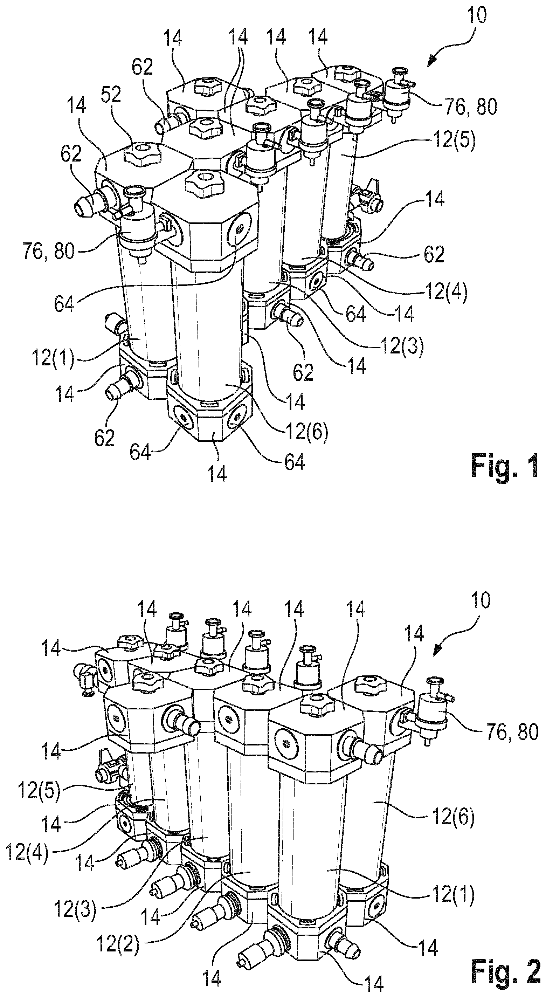

In den Figuren 1 und 2 ist beispielhaft eine Prozess-Vorrichtungsanordnung 10 für die Durchführung einer oder mehrerer Grundoperationen in einem bioverfahrenstechnischen Prozess dargestellt. Die Prozess-Vorrichtungsanordnung 10 umfasst mehrere Separationseinheiten 12, die sich hinsichtlich Separationstechnik (z. B. Filtercapsule, Chromatographiesäule, Membranadsorber) und/oder Filtermaterial und/oder Bauart und/oder Baugröße und/oder anderer Parameter unterscheiden können. Die Separationseinheiten 12 sind mithilfe einer modularen Vorrichtung untereinander verschaltet. Diese modulare Vorrichtung ist durch mehrere einzelne Verteilerkappen 14 gebildet, von denen jede mit wenigstens einer benachbarten Verteilerkappe 14 verbunden ist. Im dargestellten Ausführungsbeispiel weisen alle Verteilerkappen 14 den gleichen grundlegenden Aufbau auf, und jede Verteilerkappe 14 ist einer Separationseinheit 12 zugeordnet und an dieser fest angebracht, sodass sich insgesamt eine kompakte und stabile Prozess-Vorrichtungsanordnung 10 mit definiert (in einem Raster) angeordneten Separationseinheiten 12 ergibt.

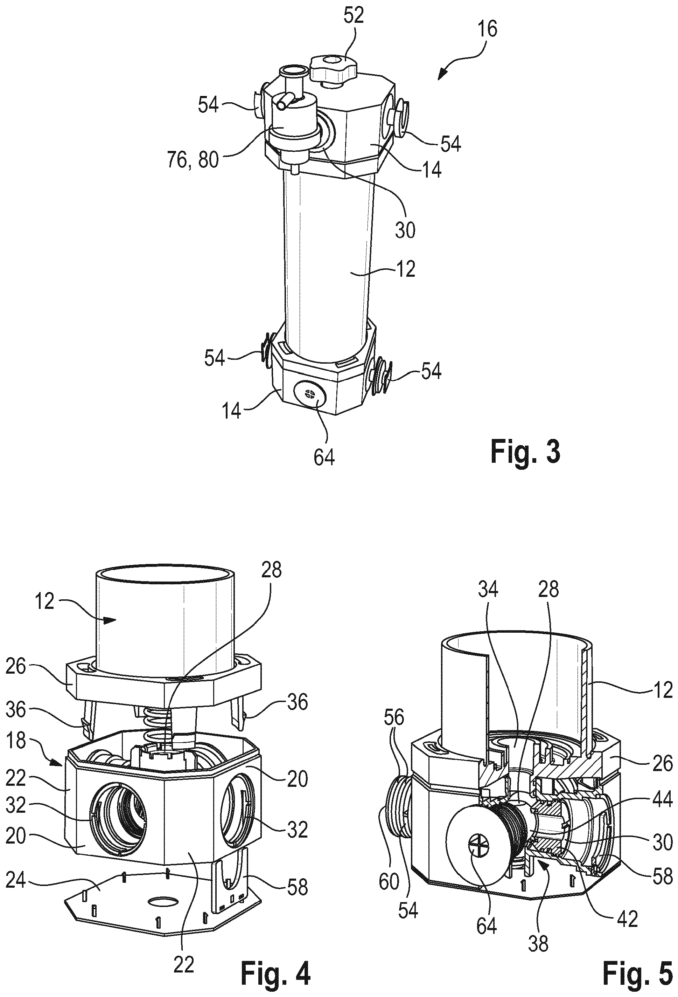

Figur 3 zeigt - ebenfalls beispielhaft - eine Untereinheit (Modul) 16 der Prozess-Vorrichtungsanordnung 10 mit einer Separationseinheit 12, die eine im Wesentlichen zylindrische Grundform hat, und zwei Verteilerkappen 14, die an den beiden Stirnseiten der Separationseinheit 12 angebracht sind.

Aus den Figuren 4 und 5 geht der grundlegende Aufbau einer ersten Variante der Verteilerkappen 14 hervor. Die Verteilerkappe 14 weist ein Gehäuse 18 auf, das im Wesentlichen die Form eines geraden Prismas hat, dessen Grund- und Deckfläche wiederum im Wesentlichen die Form eines gleichwinkligen Polygons, hier eines Oktagons, hat. Vier rechtwinklig zueinander ausgerichtete Haupt-Seitenwände 20 sind durch dazwischenliegende Neben-Seitenwände 22 miteinander verbunden. Auf der einen Stirnseite ist das Gehäuse 18 durch einen Deckel 24 geschlossen, auf der anderen Stirnseite ist das Gehäuse 18 offen und wird durch einen Boden- oder Deckelabschnitt 26 (je nachdem, ob die Verteilerkappe 14 bezogen auf die Betriebsstellung der Separationseinheit 12 unten oder oben auf die Separationseinheit 12 aufgesetzt wird) der zugeordneten Separationseinheit 12, die in den Figuren 4 und 5 nicht vollständig dargestellt ist, abgedeckt.

Im Inneren des Gehäuses 18 befindet sich eine Fluidverteilereinrichtung mit einem durch die offene Gehäuseseite zugänglichen, mittigen Arbeitsanschluss 28 und mehreren seitlichen Zuführ- oder Abführanschlüssen 30. Die Zuführ- oder Abführanschlüsse 30 der Fluidverteilereinrichtung liegen in einer Ebene, die senkrecht zur axialen Richtung des Arbeitsanschlusses 28 orientiert ist. Bei der hier gezeigten Fluidverteilereinrichtung sind vier Zuführ- oder Abführanschlüsse 30 vorgesehen, die in Winkelabständen von 90° angeordnet sind und durch entsprechende Öffnungen 32 in den Haupt-Seitenwänden 20 des Gehäuses 18 zugänglich sind.

Die Verteilerkappe 14 umfasst des Weiteren Anschlussmittel, mit denen beim Aufsetzen der Verteilerkappe 14 auf den Boden- oder Deckelabschnitt 26 der Separationseinheit 12 eine Strömungsverbindung zwischen einem Fluideinlass oder -auslass 34 der Separationseinheit 12 und dem Arbeitsanschluss 28 der Fluidverteilereinrichtung hergestellt wird. Mithilfe von Montagemitteln 36 (Rastelemente o.ä.) wird die Verteilerkappe 14 am Boden- oder Deckelabschnitt 26 der Separationseinheit 12 fixiert. Die Boden- oder Deckelabschnitte 26 aller Separationseinheiten 12 sind auf die standardisiert angeordneten und gestalteten Anschlussmittel und Montagemittel 36 der Verteilerkappen 14 abgestimmt.

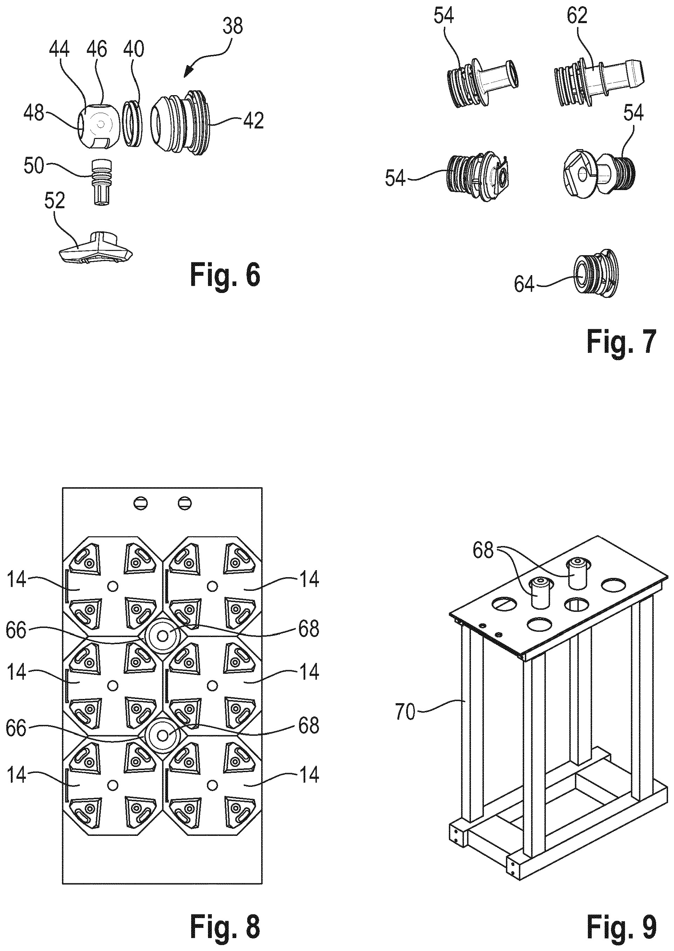

Die Fluidverteilereinrichtung ist bei dieser Variante im Wesentlichen durch ein Mehrwegeventil gebildet, das die genannten Anschlüsse bereitstellt und verschiedene Schaltstellungen einnehmen kann. Die wesentlichen Komponenten dieses hier als Kugelventil 38 ausgebildeten Ventils sind in Figur 6 einzeln gezeigt. Eine auf jeder Zuführ- oder Abführanschlussseite mit einem Dichtring 40 abgedichtete und durch ein Stützelement 42 in Position gehaltene Kugel 44 mit Bohrungen 46, 48 kann über eine Spindel 50 in verschiedene Schaltstellungen gedreht werden.

Im dargestellten Ausführungsbeispiel hat die Kugel 44 eine mit dem Fluideinlass oder -auslass 34 der Separationseinheit 12 fluchtende erste Bohrung 46 und eine damit verbundene senkrechte seitliche zweite Bohrung 48. Durch Drehen der Kugel 44 um die Achse der ersten Bohrung 46 kann die zweite Bohrung 48 selektiv in Strömungsverbindung mit einem der Zuführ- oder Abführanschlüsse 30 in Strömungsverbindung gebracht werden, d. h. die zweite Bohrung 48 fluchtet in der jeweiligen Schaltstellung mit dem entsprechenden Zuführ- oder Abführanschluss 30.

Somit sind bei diesem Ausführungsbeispiel vier Schaltstellungen möglich, in denen der mit dem Fluideinlass oder -auslass 34 der Separationseinheit 12 verbundene Arbeitsanschluss 28 jeweils mit genau einem der vier Zuführ- oder Abführanschlüsse 30 in Strömungsverbindung steht. Das bedeutet, dass - je nach Betriebsart - der Separationseinheit 12 Fluid durch einen ausgewählten Zuführ- oder Abführanschluss 30 zugeführt werden kann, oder Fluid aus der Separationseinheit 12 durch einen ausgewählten Zuführ- oder Abführanschluss 30 abgeführt werden kann.

Selbstverständlich ist die Fluidverteilereinrichtung nicht auf dieses Ausführungsbeispiel eingeschränkt. Es sind auch Ausführungen mit Schaltstellungen möglich, bei denen mehrere Zuführ- oder Abführanschlüsse 30 gleichzeitig in Strömungsverbindung mit dem Arbeitsanschluss 28 gebracht werden können, auch wechselseitig mit einem oder mehreren der anderen Zuführ- oder Abführanschlüsse 30. Auch eine selektive Sperrung des Arbeitsanschlusses 28 in Kombination mit einer der anderen Funktionalitäten ist grundsätzlich möglich. Wenigstens kann die Fluidverteilereinrichtung aber zwischen zwei definierten Schaltstellungen wechseln.

Die in Richtung der Mittelachse der Separationseinheit 12 aus dem Gehäuse 18 der Verteilerkappe 14 herausragende Spindel 50 der Fluidverteilereinrichtung dient hier als Interface zum Wechseln der Schaltstellungen. An die Spindel 50 kann ein Betätigungselement 52 für eine manuelle Bedienung gekoppelt sein, oder die Spindel 50 ist an eine motorisch oder auf andere Weise betriebene Betätigungseinrichtung gekoppelt, die mit einer Steuereinheit verbunden ist.

Zum Verbinden zweier benachbarter Verteilerkappen 14 sind Verbindungsmittel vorgesehen, die zum einen eine starre mechanische Verbindung und zum anderen eine Strömungsverbindung zwischen den benachbarten Verteilerkappen 14 herstellt. Als Verbindungsmittel dient insbesondere ein Konnektor 54, hier eine Doppelkupplung (doppelt männlicher Konnektor), dessen erstes Ende mit einem der Zuführ- oder Abführanschlüsse 30 der Fluidverteilereinrichtung der ersten Verteilerkappe 14 verbunden ist. Der Konnektor 54 ragt aus der Öffnung 32 der zugeordneten Haupt-Seitenwand 20 des Gehäuses 18 und erstreckt sich durch die Öffnung 32 der gegenüberliegenden Haupt-Seitenwand 20 des Gehäuses 18 der benachbarten zweiten Verteilerkappe 14. Das zweite Ende des Konnektors 54 ist mit dem zugeordneten Zuführ- oder Abführanschluss 30 der Fluidverteilereinrichtung der zweiten Verteilerkappe 14 verbunden. Innerhalb der Gehäuse 18 ist der Konnektor 54 jeweils durch zwei O-Ringe 56 abgedichtet und mit einem Sicherungselement 58 am Gehäuse 18 fixiert.

Im Inneren des Konnektors 54 ist ein Strömungskanal 60 gebildet, der die Strömungsverbindung zwischen den beiden Zuführ- oder Abführanschlüssen 30 herstellt. Die den Strömungskanal 60 umgebende Wandung ist so dick und stabil, dass sie hohen Drücken (4 bar und ggf. mehr) standhalten kann. Die Länge des Konnektors 54 ist so bemessen, dass die miteinander verbundenen Verteilerkappen 14 sehr dicht aneinander liegen oder sich berühren.

Die geometrische Gestaltung der Verteilerkappen 14 und der Konnektoren 54 gibt ein logisches Raster mit definierten Stellen vor, an denen Verteilerkappen 14 für eine Verbindung mit benachbarten Verteilerkappen 14 angeordnet sein können. Dank der starren Konnektoren 54 als Verbindungsmittel ergibt sich ein stabiler Verbund der Verteilerkappen 14.

In Figur 7 sind beispielhaft weitere Typen von Konnektoren 54 einschließlich einer Schlauchtülle (hose barb) 62 gezeigt, die anstelle des in Figur 5 gezeigten Konnektors 54 verwendet werden können. Nicht genutzte Zuführ- oder Abführanschlüsse 30 können mit einem Blindstopfen 64 verschlossen werden (siehe auch Figur 5). Jeder Konnektor 54, jede Schlauchtülle 62 und jeder Blindstopfen 64 ist bezüglich des Gehäuses 18, in dem er/sie angeordnet ist, durch zwei O-Ringe 56 abgedichtet und mit einem Sicherungselement 58 fixiert.

In Figur 8 ist beispielhaft ein Verbund von Verteilerkappen 14 gezeigt, die in einem 3x2-Raster angeordnet sind. Aufgrund der schrägen Neben-Seitenwände 22 ergeben sich in diesem Beispiel trotz der dichten Anordnung definierte Freiräume 66. In diesen Freiräumen 66 können Haltemittel 68 angeordnet sein, um den Verbund auf einem Gestell 70 zu fixieren, wie es beispielhaft in Figur 9 gezeigt ist. Durch die Freiräume 66 können auch zusätzliche Schlauchleitungen o.ä. durchgeführt sein.

Mit den Verteilerkappen 14 und deren einstellbarer Fluidverteilereinrichtungen können Separationseinheiten 12 seriell und/oder parallel verschaltet werden. Anhand der in den Figuren 1 und 2 gezeigten Prozess-Vorrichtungsanordnung 10 soll dies kurz erläutert werden. Bei dieser beispielhaften Anordnung sind fünf verschiedene Separationseinheiten 12 in Reihe geschaltet, die sich z. B. hinsichtlich Filtermaterial, Porengröße etc. unterscheiden. Zur leichteren Orientierung sind diese fünf Separationseinheiten mit den Zusätzen (1) bis (5) versehen. Die Fluidverteilereinrichtungen der jeweils oben und unten an den Separationseinheiten 12 angebrachten Verteilerkappen 14 sind so geschaltet, dass sich ein Strömungsweg von einer äußeren unteren Verteilerkappe 14 nach oben durch die zugehörige erste Separationseinheit 12 (1) zu deren oberer Verteilerkappe 14, von dort zur benachbarten oberen Verteilerkappe 14 und nach unten durch die zugehörige zweite Separationseinheit 12 (2) zu deren unterer Verteilerkappe 14 usw. bis zur oberen Verteilerkappe 14 der letzten Separationseinheit 12 (5) in der Reihe ergibt. So lassen sich mit nur einer Prozess-Vorrichtungsanordnung 10 verschiedene Separationsschritte nacheinander ausführen, ohne dass Medium zwischengelagert werden muss.

Die Filterflächen der einzelnen Separationsschritte lassen sich vergrößern, indem weitere Separationseinheiten 12 parallel geschaltet werden. Bei der in den Figuren 1 und 2 gezeigten Prozess-Vorrichtungsanordnung 10 ist beispielsweise eine Separationseinheit 12 (6) des gleichen Typs wie die erste Separationseinheit 12 (1) parallel zur ersten Separationseinheit 12 (1) geschaltet. Die Fluidverteilereinrichtung der unteren Verteilerkappe 14 der ersten Separationseinheit 12 (1) ist so geschaltet, dass das zugeführte Medium nicht nur durch die erste Separationseinheit 12 (1), sondern auch zur seitlich benachbarten unteren Verteilerkappe 14 der parallelen Separationseinheit 12 (6) geleitet wird. Der durch die parallele Separationseinheit 12 (6) strömende Anteil des Mediums gelangt über die obere Verteilerkappe 14 zur benachbarten oberen Verteilerkappe 14 der ersten Separationseinheit 12 (1) und wird von dort zusammen mit dem anderen Anteil des Mediums zur oberen Verteilerkappe 14 der zweiten Separationseinheit 12 (2) geleitet.

Selbstverständlich sind auch grundlegend andere Konfigurationen mit anderen Zielsetzungen möglich, wie etwa redundante Anordnungen zur Erhöhung der Prozesssicherheit.

Die Strömungswege durch die Prozess-Vorrichtungsanordnung 10 lassen sich mithilfe der einstellbaren Fluidverteilereinrichtungen der Verteilerkappen 14 vor und während des Betriebs konfigurieren.

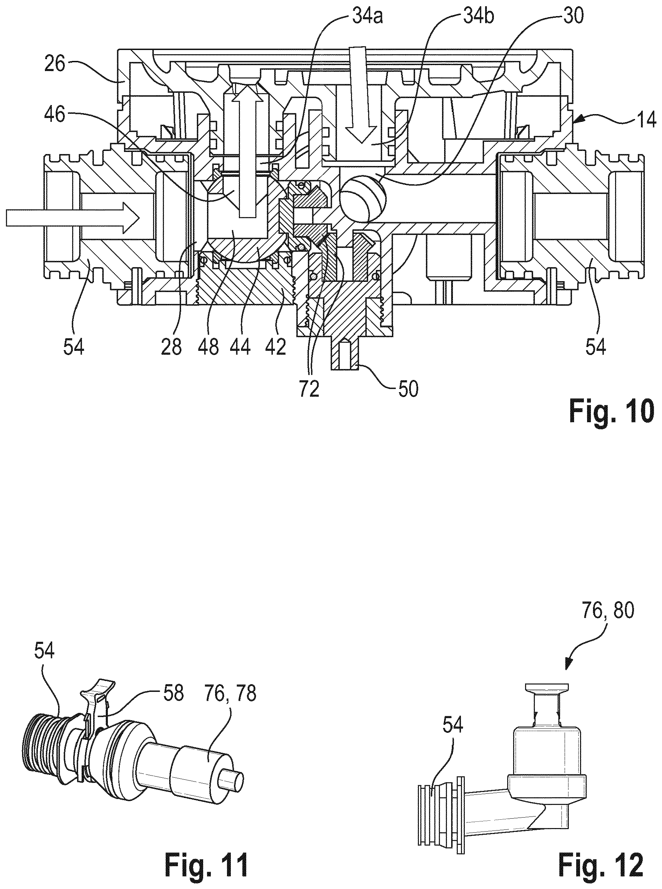

Ein anderer Verteilerkappen-Typ, der hier als T-Style-Variante bezeichnet wird, ist in Figur 10 gezeigt. Dieser Verteilerkappen-Typ ist auf Separationseinheiten 12 abgestimmt, deren Fluideinlass 34a und Fluidauslass 34b auf derselben Stirnseite angeordnet sind. In der Betriebsstellung der Separationseinheit 12 ist dies in der Regel die untere Stirnseite. Bezüglich der Mittelachse der Separationseinheit 12 ist der Fluidauslass 34b mittig angeordnet, wogegen der Fluideinlass 34a radial versetzt dazu angeordnet ist.

Dementsprechend ist der Arbeitsanschluss 28 der T-Style-Verteilerkappe 14 so angeordnet, dass er im montierten Zustand der Verteilerkappe 14 radial versetzt zur Mittelachse der Separationseinheit 12 ist und mit deren Fluideinlass 34a eine Strömungsverbindung herstellt. Ein Zuführ- oder Abführanschluss 30 der Verteilerkappe 14, der in diesem Fall als Abführanschluss benutzt wird, fluchtet mit dem mittig angeordneten Fluidauslass 34b der Separationseinheit 12, sodass auch hier eine Strömungsverbindung hergestellt ist.

Die schaltbare Fluidverteilereinrichtung der T-Style-Verteilerkappe 14, die den Arbeitsanschluss 28 und den Abführanschluss 30 bereitstellt, ist in diesem Fall als Kugelventil 38 ausgebildet, das über eine mittig angeordnete Spindel 50 und ein Kegelradgetriebe 72 in wenigstens zwei verschiedene Ventilstellungen gebracht werden kann.

Die Kugel 44 des Kugelventils 38 ist mit Dichtringen 40 abgedichtet und wird durch ein Stützelement 42 in Position gehalten. Im dargestellten Ausführungsbeispiel hat die Kugel 44 eine mit dem Fluideinlass 34a der Separationseinheit 12 fluchtende erste Bohrung 46 und eine damit verbundene senkrechte seitliche zweite Bohrung 48, die mit dem Arbeitsanschluss 28 der Fluidverteilereinrichtung fluchtet. Durch Drehen der Spindel 50 wird über das Kegelradgetriebe 72 die Kugel 44 um die Achse der zweiten Bohrung 48 gedreht. Dadurch entfernt sich der Arbeitsanschluss 28 vom Fluideinlass 34a der Separationseinheit 12, bis keine Strömungsverbindung mehr besteht.

Somit sind bei diesem Ausführungsbeispiel zwei Schaltstellungen möglich. In der ersten Schaltstellung besteht eine Strömungsverbindung zwischen dem Arbeitsanschluss 28 der Fluidverteilereinrichtung der Verteilerkappe 14 und dem Fluideinlass 34a der Separationseinheit 12. In der zweiten Schaltstellung ist diese Strömungsverbindung gesperrt.

Die in Richtung der Mittelachse der Separationseinheit 12 aus dem Gehäuse 18 der Verteilerkappe 14 herausragende Spindel 50 der Fluidverteilereinrichtung dient hier als Interface zum Wechseln der Schaltstellungen. An die Spindel 50 kann ein Betätigungselement 52 für eine manuelle Bedienung gekoppelt sein, oder die Spindel 50 ist an eine motorisch oder auf andere Weise betriebene Betätigungseinrichtung gekoppelt, die mit einer Steuereinheit verbunden ist.

Weitergehende Schaltmöglichkeiten, mit denen das aus dem Fluidauslass 34b der Separationseinheit 12 austretende Fluid selektiv auf einen bestimmten oder auf mehrere Abführanschlüsse 30 verteilt werden könnte, sind hier nicht vorgesehen, aber grundsätzlich möglich. Beispielsweise könnte die Fluidverteilereinrichtung an jedem der Abführanschlüsse 30 ein schaltbares Membranventil vorsehen.

Der modulare Charakter der Vorrichtung zeigt sich - abgesehen von den verschiedenen Verschaltungsmöglichkeiten der Verteilerkappen 14 mit den zugehörigen Separationseinheiten 12 - daran, dass zum einen der Arbeitsanschluss 28 einer Verteilerkappe 14 - anstelle einer Separationseinheit 12 - auch an eine erste Funktionseinheit 74 angeschlossen werden kann, worauf später noch genauer eingegangen wird, und dass zum anderen die Zuführ- oder Abführanschlüsse 30 der Fluidverteilereinrichtungen der Verteilerkappen 14 auch dazu genutzt werden können, zweite Funktionseinheiten 76 an den freien Seiten der Verteilerkappen 14 anzuschließen. Unter solchen zweiten Funktionseinheiten 76 sind in diesem Zusammenhang keine weiteren Verteilerkappen 14 und auch keine Separationseinheiten 12 zu verstehen, sondern spezielle Komponenten, die eine zusätzliche Funktionalität bereitstellen oder ermöglichen.

In Figur 11 ist ein Beispiel für eine solche zweite Funktionseinheit 76 dargestellt. Ein Sensor 78 kann über Verbindungsmittel, hier ein geeigneter Konnektor 54 und ein Sicherungselement 58, mit einem der Zuführ- oder Abführanschlüsse 30 der Fluidverteilereinrichtung einer Verteilerkappe 14 verbunden werden. Das bedeutet, dass sowohl eine starre mechanische Verbindung zwischen der Verteilerkappe 14 und dem Sensor 78 als auch eine Strömungsverbindung zwischen dem Zuführ- oder Abführanschluss 30 und dem Sensor 78 hergestellt werden.

Als Sensoren 78 kommen beispielsweise Einrichtungen in Frage, die den Druck, den Fluss, die Viskosität, den pH-Wert oder die elektrische Leitfähigkeit messen. Auch spektroskopische Messeinrichtungen (UV-VIS, NIR, Raman etc.) sind möglich. Die Messwerte des Sensors 78 können z. B. für eine nachgelagerte Steuerung der Prozess-Vorrichtungsanordnung 10 genutzt werden.

Die Figur 12 zeigt eine weitere zweite Funktionseinheit 76 in Form einer Entlüftungseinrichtung 80, die ebenfalls mit einem geeigneten Konnektor 54 an einen Zuführ- oder Abführanschluss 30 der Fluidverteilereinrichtung einer Verteilerkappe 14 angeschlossen werden kann (siehe auch Figuren 1 bis 3).

Eine zweite Funktionseinheit 76 kann auch über eine flexible Schlauchleitung an einen Zuführ- oder Abführanschluss 30 der Fluidverteilereinrichtung einer Verteilerkappe 14 angeschlossen sein, beispielsweise mithilfe einer am Gehäuse 18 der Verteilerkappe 14 fixierten Schlauchtülle 62.

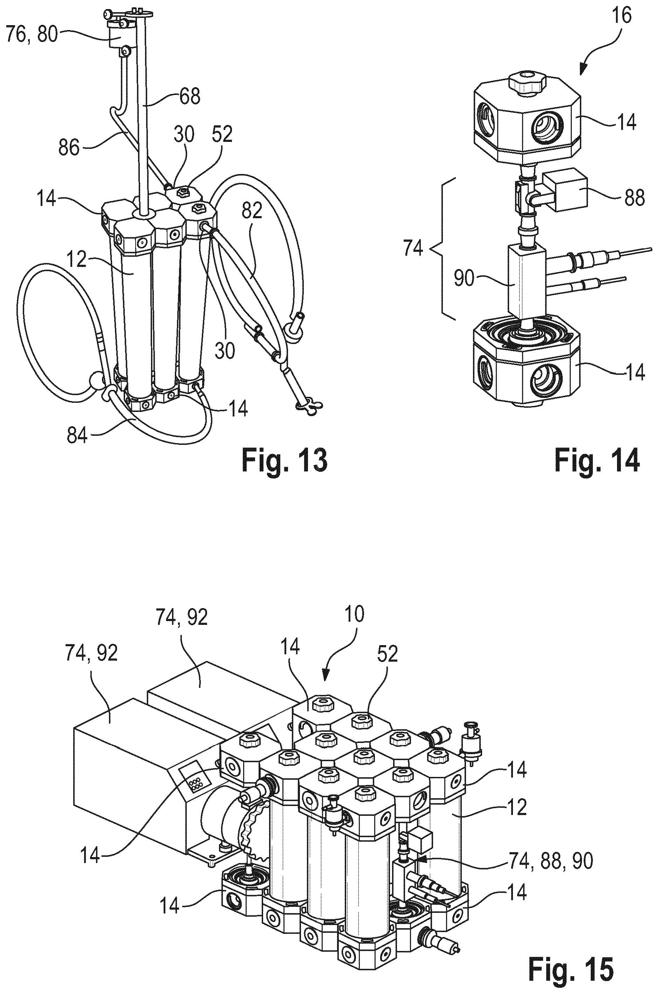

Ein Praxisbeispiel ist in Figur 13 gezeigt, das nachfolgend kurz erläutert wird. Die in Figur 13 dargestellte Prozess-Vorrichtungsanordnung 10 umfasst sechs Separationseinheiten 12 in Form von Filtercapsulen der gleichen Bauart, die in einem kompakten 3x2-Raster angeordnet und jeweils an ihren beiden Stirnseiten (Unfiltratseite bzw. Filtratseite) mit Verteilerkappen 14 versehen sind. Mittels der Verteilerkappen 14 sind die Separationseinheiten 12 parallel geschaltet, um insgesamt eine große Filterfläche zur Verfügung zu stellen.

Ein Zuführ- oder Abführanschluss 30 einer oberen Verteilerkappe 14, an den eine Zuführschlauchleitung 82 angeschlossen ist, dient als gemeinsamer Zufluss für alle Separationseinheiten 12. Die Fluidverteilereinrichtungen der oberen Verteilerkappen 14 sind so geschaltet, dass das über die Zuführschlauchleitung 82 zugeführte Fluid auf alle Separationseinheiten 12 verteilt wird.

Die Fluidverteilereinrichtungen der unteren Verteilerkappen 14 sind wiederum so geschaltet, dass von allen Separationseinheiten 12 das austretende Fluid zu einem bestimmten Zuführ- oder Abführanschluss 30 einer unteren Verteilerkappe 14 geleitet wird, der als gemeinsamer Abfluss dient. An diesen Zuführ- oder Abführanschluss 30 ist eine Abführschlauchleitung 84 angeschlossen.

Die Fluidverteilereinrichtungen der oberen Verteilerkappen 14 lassen sich zudem so einstellen, dass ihre Arbeitsanschlüsse 28 alle mit einem anderen Zuführ- oder Abführanschluss 30 einer oberen Verteilerkappe 14 verbunden sind. Dieser Zuführ- oder Abführanschluss 30 dient als gemeinsamer Entlüftungsanschluss, an den über eine Entlüftungsschlauchleitung 86 eine Entlüftungseinrichtung 80 angeschlossen ist. Die Entlüftungseinrichtung 80 ist in der Betriebsstellung der Prozess-Vorrichtungsanordnung 10 oberhalb der oberen Verteilerkappen 14 angeordnet, damit unter normalen Betriebsbedingungen kein zugeführtes Fluid in die Entlüftungseinrichtung 80 gelangt. Hierzu ist die Entlüftungseinrichtung 80 an einem Haltemittel 68 in Form einer Stange fixiert, die sich von einem der Freiräume 66 zwischen den oberen Verteilerkappen 14 nach oben erstreckt. Über die Entlüftungseinrichtung 80 können alle Separationseinheiten 12 gemeinsam entlüftet werden. Dank der Einstellmöglichkeiten der Fluidverteilereinrichtungen kann der als Entlüftungsanschluss dienende Zuführ- oder Abführanschluss 30 auch für die Durchführung eines gemeinsamen Integritätstests für alle Separationseinheiten 12 genutzt werden.

Eine weitere Möglichkeit der Nutzung der Verteilerkappen 14 in einer Prozess-Vorrichtungsanordnung 10 besteht darin, den Arbeitsanschluss 28 der Verteilerkappe 14 nicht mit dem Fluideinlass oder -auslass 34 einer Separationseinheit 12 zu verbinden, sondern mit einem Fluideinlass oder - auslass 34 einer ersten Funktionseinheit 74, wie beispielhaft in Figur 14 dargestellt. Das bedeutet, dass an einer oder mehreren Stellen der Prozess-Vorrichtungsanordnung 10 anstelle einer Separationseinheit 12 eine erste Funktionseinheit 74 in einen Strömungsweg integriert oder am Anfang oder Ende eines Strömungswegs angeordnet ist, wie beispielhaft in Figur 15 dargestellt.

Damit die erste Funktionseinheit 74 auf die gleiche Weise wie eine Separationseinheit 12 an eine Verteilerkappe 14 angeschlossen werden kann, verfügt sie über einen Fluideinlass oder -auslass 34, der dem einer Separationseinheit 12 entspricht. Somit ist die erste Funktionseinheit 74 kompatibel zu den Verteilerkappen 14. Ebenso wie bei den Separationseinheiten 12 besteht grundsätzlich die Möglichkeit, die erste Funktionseinheit 74 auf auch auf der anderen Stirnseite mit einem Fluideinlass oder -auslass 34 zu versehen, sodass ein Durchströmen der ersten Funktionseinheit 74 und das Anschließen einer weiteren Verteilerkappe 14 auf der anderen Stirnseite ermöglicht ist (siehe insbesondere Figur 15).

Bei dem in den Figuren 14 und 15 gezeigten Ausführungsbeispiel handelt es sich bei der ersten Funktionseinheit 74 um eine Kombination eines UV-Sensors 88 und eines Leitfähigkeits- und pH-Sensors 90. Außerdem sind bei der in Figur 15 gezeigten Prozess-Vorrichtungsanordnung 10 zwei erste Funktionseinheiten 74 in Form von Pumpen 92 vorgesehen, die jeweils zwischen zwei Verteilerkappen 14 angeordnet sind und Fluid vom Arbeitsanschluss 28 der oberen Verteilerkappe 14 zum Arbeitsanschluss 28 der unteren Verteilerkappe 14 fördern, oder - je nach Bedarf - umgekehrt.

Weitere Beispiele für erste Funktionseinheiten 74, die einzeln oder in Kombination an einen oder zwei Arbeitsanschlüsse 28 von Verteilerkappen 14 angeschlossen werden können, sind Sensor(anordnung)en, statische Mischer, Reservoire bzw. Zwischenspeicher, Probeentnahmeeinrichtungen und Entlüftungseinrichtungen, wobei die Aufzählung nicht abschließend ist. Eine erste Funktionseinheit 74 in diesem Sinne kann auch nur funktionswesentliche Teile solcher Einheiten umfassen. Eine einfache Form einer solchen ersten Funktionseinheit 74 ist ein Leerrohr.

Unabhängig von der endgültigen Konfiguration der Prozess-Vorrichtungsanordnung 10 sind alle Verteilerkappen 14 und zumindest alle direkt an den Verteilerkappen 14 angebrachten Separationseinheiten 12 und ggf. alle ersten und zweiten Funktionseinheiten 74, 76 und sonstigen Komponenten (z. B. Schlauchleitungen) als Einweg-Komponenten ausgeführt, d. h. sie sind für den einmaligen Gebrauch bestimmt und dementsprechend aus geeigneten Kunststoffmaterialien gebildet. Die gesamte Prozess-Vorrichtungsanordnung 10 ist vor ihrer Inbetriebnahme vorsterilisiert, sodass sie sofort einsatzbereit ist.

Andererseits erlaubt es der modulare Aufbau der Vorrichtung, diese nach Gebrauch zu demontieren und zu reinigen, z.B. durch Rückspülen, sodass eine erneute Verwendung der gesamten Vorrichtung oder Teilen der Vorrichtung grundsätzlich möglich ist. Eine erneute Verwendung hängt jedoch insbesondere von den eingesetzten Separationseinheiten 12 und den regulatorischen Gegebenheiten des Umfeldes ab.

Zur Vermeidung einer Zerstörung der modularen Vorrichtung durch Überdruck können an einen oder mehrere der nicht genutzten Zuführ- oder Abführanschlüsse 30 und/oder Arbeitsanschlüsse 28 der Verteilerkappen 14 ein Ventil, eine Berstmembran oder ein vergleichbares Mittel angebracht werden, das bei einem Überdruck öffnet und den Druck an die Umgebung oder in einen angeschlossenen Behälter ablässt.

Eine modulare Vorrichtung, wie sie oben anhand mehrerer Beispiele beschrieben wurde, kann in der biopharmazeutischen Industrie, insbesondere zur Durchführung eines oder mehrerer Prozessschritte in einem Downstream-Prozess verwendet werden. Die Erfindung ist aber nicht auf eine solche Anwendung eingeschränkt. Unter anderem ist eine Verwendung in Bind/Elute-und in Flow-through-Prozessen im Rahmen von Membran- und Säulenchromatographie-Anwendungen möglich. Nachfolgend werden noch einige spezielle Anwendungsfälle beschrieben.

Die modulare Vorrichtung kann in einer Prozess-Vorrichtungsanordnung 10 zum Aufteilen eines größeren Volumens eines Mediums in mehrere kleine Einheiten genutzt werden, z.B. für das Verteilen des Inhalts eines großen Bioreaktors auf mehrere Beutel (Bags). Mithilfe der modularen Vorrichtung können hierfür mehrere Verteilerkappen 14 mit integrierten Fluidverteilereinrichtungen so geschaltet werden, dass das zu verteilende Medium zunächst in eine erste Verteilerkappe 14 und ausgehend von dieser durch eine oder mehrere Separationseinheiten 12 geleitet werden. Dabei kann es sich um eine Parallelschaltung gleichartiger Separationseinheiten 12 oder um eine Reihenschaltung unterschiedlicher Separationseinheiten 12 handeln.

Im Anschluss daran sind verschiedene Varianten für die weitere Fluidführung möglich. Allen gemein ist, dass die Verteilerkappen 14 über einen oder mehrere ihrer Zuführ- oder Abführanschlüsse 30 mit einem oder mehreren Subvolumina (Behälter, z.B. Beutel) verbunden sind.

Wenn das bzw. die mit der Verteilerkappe 14 verbundenen Subvolumina gefüllt sind, schaltet die Fluidverteilereinrichtung in der Verteilerkappe 14, sodass der bzw. die Zuführ- oder Abführanschlüsse 30 verschlossen werden und gleichzeitig der Strömungspfad über einen anderen Zuführ- oder Abführanschluss 30 zur benachbarten Verteilerkappe 14 geöffnet wird. Alternativ kann auch über den dauerhaft offenen Arbeitsanschluss 28 eine Verbindung zu einer ersten Funktionseinheit 74 (im einfachsten Fall nur eine Fluidleitung, evtl. mit Fluss- oder Bubble-Sensorik, oder eine Separationseinheit 12 genutzt werden. Somit kann eine Verbindung zu einer weiteren Verteilerkappe 14 am anderen Ende der ersten Funktionseinheit 74 bzw. Separationseinheit 12 hergestellt werden, die wiederum über einen oder mehrere ihrer Zuführ- oder Abführanschlüsse 30 mit einem oder mehreren Subvolumina verbunden ist. Dieses Prinzip kann in gleicher Weise für eine beliebige Anzahl von Verteilerkappen 14 und Subvolumina fortgesetzt werden.

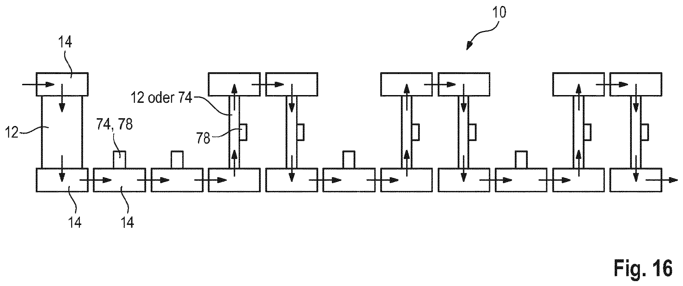

Figur 16 zeigt schematisch und beispielhaft, wie eine solche Prozess-Vorrichtungsanordnung 10 aufgebaut sein kann. In der Darstellung der Figur 16 sind die Strömungspfade mit Pfeilen gekennzeichnet. Nicht dargestellt sind die Zuführ- oder Abführanschlüsse 30 und die mit diesen verbundenen Subvolumina. Bei dieser beispielhaft dargestellten linearen Prozess-Vorrichtungsanordnung 10 stehen bei den unteren Verteilerkappen 14 jeweils maximal zwei und bei den oberen Verteilerkappen jeweils maximal drei Zuführ- oder Abführanschlüsse 30 für eine Verbindung mit einem Subvolumen zur Verfügung.

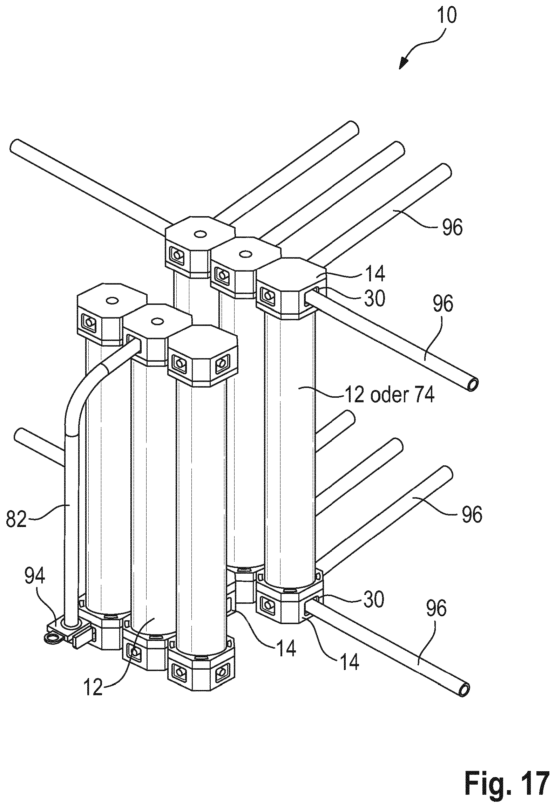

In Figur 17 ist eine nicht-lineare Prozess-Vorrichtungsanordnung 10 mit einer verzweigten Anordnung von Verteilerkappen 14 gezeigt. Die beiden unteren Verteilerkappen 14 der mittleren Separationseinheiten 12 bzw. ersten Funktionseinheiten 74 sind über eine dazwischen angeordnete, nicht sichtbare Verteilerkappe 14 miteinander verbunden. Das aufzuteilende Medium wird hier über die mit einem Sterilkonnektor 94 versehene Zuführleitung 82 zugeführt. Die mit den Zuführ- oder Abführanschlüssen 30 verbundenen Abfüllleitungen 96 führen zu den (nicht gezeigten) Subvolumina.

Mit der modularen Vorrichtung kann auch eine At-line-Analytik ermöglicht werden. Hierfür bedarf es eines nicht kontinuierlichen Abzweigens eines Teils des zu prozessierenden Mediums im laufenden Prozess. Das abgezweigte Medium kann dann über verschiedene Analyseverfahren, wie etwa spektroskopische oder chemisch reaktive Verfahren, untersucht werden.

Die Funktion der Absonderung eines Teils des Mediums kann über einen schaltbaren Zuführ- oder Abführanschluss 30 einer Verteilerkappe 14 erfolgen. Die Analysemetrik kann direkt an einen anderen Zuführ- oder Abführanschluss 30 dieser Verteilerkappe 14 angeschlossen werden. Alternativ kann die Funktion der Medium-Absonderung auch in eine erste Funktionseinheit 74 integriert werden, die an einen Arbeitsanschluss 28 einer Verteilerkappe 14 angeschlossen ist. Die erste Funktionseinheit 74 kann zudem die entsprechende Schnittstelle zur Anbindung der Analysemetrik enthalten, oder diese ist über die am anderen Ende der ersten Funktionseinheit 74 angebrachte Verteilerkappe 14 auf die oben beschriebene Weise angeschlossen.

In bestimmten Anwendungsfällen ist ein Durchmischen des Mediums gewünscht. Eine Mischwirkung kann durch eine gezielte Zirkulation des Mediums in einer Separationseinheit 12 oder ersten Funktionseinheit 74 erreicht oder unterstützt werden. Hierfür wird jeweils ein Zuführ- oder Abführanschluss 30 an der zugehörigen oberen Verteilerkappe 14 mit einem Zuführ- oder Abführanschluss 30 der zugehörigen unteren Verteilerkappe 14 der Separationseinheit 12 oder ersten Funktionseinheit 74 verbunden, sodass sich zumindest kurzzeitig für Mischzwecke ein geschlossener Kreislauf ergibt. Die Verbindung kann auch indirekt erfolgen, d.h. die Verbindung zwischen dem oberen und dem unteren Zuführ- oder Abführanschluss 30 muss nicht zwingend an den unmittelbar an der Separationseinheit 12 oder ersten Funktionseinheit 74 angebrachten Verteilerkappen 14 erfolgen. In die Verbindung sollte aber eine Pumpe eingebunden sein, der der Fluss muss auf andere Weise den Fluss initiiert werden.

Ganz allgemein lassen sich die Separationseinheiten 12 und ggf. die ersten Funktionseinheiten 74 mittels der Verteilerkappen 14 mechanisch und strömungstechnisch miteinander verbinden, und zwar - soweit vorhanden - über die unten und/oder oben an den Separationseinheiten 12 bzw. ersten Funktionseinheiten 74 angebrachten Verteilerkappen 14. Es lassen sich auch unterschiedlich hohe Separationseinheiten 12 bzw. erste Funktionseinheiten 74 miteinander verbinden, wobei in diesem Fall benachbarte Separationseinheiten 12 bzw. erste Funktionseinheiten 74 entweder nur über die oberen oder nur über die unteren Verteilerkappen 14 verbunden werden können.

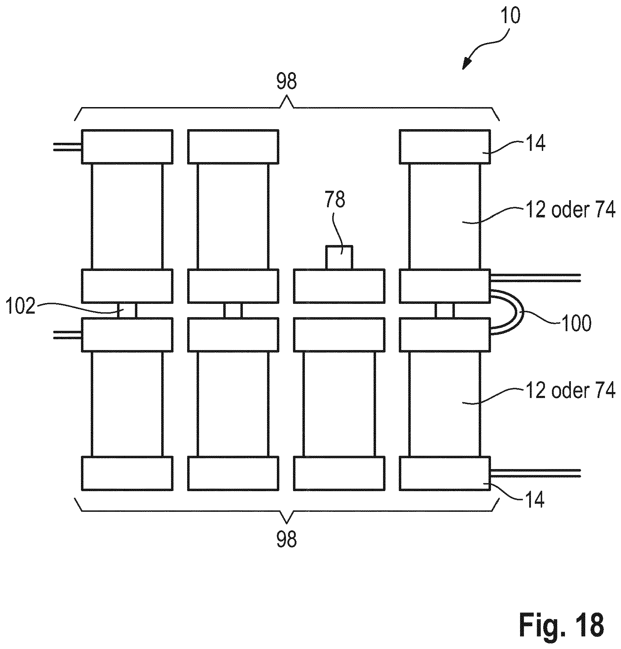

Ein platzsparender Aufbau einer Prozess-Vorrichtungsanordnung 10 mit einem reduzierten Footprint lässt sich durch eine Übereinander-Anordnung von Untereinheiten 16 erreichen, wie sie beispielhaft in Figur 18 gezeigt ist. Mehrere solcher Untereinheiten 16 mit einer Separationseinheiten 12 oder ersten Funktionseinheit 74 und wenigstens einer Verteilerkappe 14 sind zu einer Modulbaugruppe 98 zusammengefasst. Beispielsweise kann für mehrere Prozessschritte jeweils eine Modulbaugruppe 98 konfiguriert werden. Diese Modulbaugruppen 98 können bevorzugt direkt, aber auch indirekt übereinander gestapelt werden.

Falls eine fluidische Verbindung zwischen den Modulbaugruppen 98 gewünscht ist, z.B. um zwei Prozessschritte miteinander zu verschalten, kann diese über Verbindungsleitungen 100 hergestellt werden, die an freien seitlichen Zuführ- oder Abführanschlüssen 30 der Verteilerkappen 14 angeschlossen sind.

Fluidische Verbindungen lassen sich auch über vertikal ausgerichtete, den Arbeitsanschlüssen 28 gegenüberliegende Verbindungsanschlüsse 102 der Fluidverteilereinrichtungen der Verteilerkappen 14 realisieren, insbesondere zur Parallelschaltung von verketteten Separationseinheiten 12.

### Bezugszeichenliste

- 10: Prozess-Vorrichtungsanordnung
- 12: Separationseinheit
- 14: Verteilerkappe
- 16: Untereinheit (Modul)
- 18: Gehäuse
- 20: Haupt-Seitenwand
- 22: Neben-Seitenwand
- 24: Deckel
- 26: Boden- oder Deckelabschnitt
- 28: Arbeitsanschluss
- 30: Zuführ- oder Abführanschluss
- 32: Öffnung
- 34: Fluideinlass oder -auslass
- 34a: Fluideinlass
- 34b: Fluidauslass
- 36: Montagemittel
- 38: Kugelventil
- 40: Dichtring
- 42: Stützelement
- 44: Kugel
- 46: erste Bohrung
- 48: zweite Bohrung
- 50: Spindel
- 52: Betätigungselement
- 54: Konnektor
- 56: O-Ring
- 58: Sicherungselement
- 60: Strömungskanal
- 62: Schlauchtülle
- 64: Blindstopfen
- 66: Freiraum
- 68: Haltemittel
- 70: Gestell
- 72: Kegelradgetriebe
- 74: erste Funktionseinheit
- 76: zweite Funktionseinheit
- 78: Sensor
- 80: Entlüftungseinrichtung
- 82: Zuführschlauchleitung
- 84: Abführschlauchleitung
- 86: Entlüftungsschlauchleitung
- 88: UV-Sensor
- 90: Leitfähigkeits- und pH-Sensor
- 92: Pumpe
- 94: Sterilkonnektor
- 96: Abfüllleitung
- 98: Modulbaugruppe
- 100: Verbindungsleitung
- 102: Verbindungsanschluss

## Patentansprüche

1. Modulare Vorrichtung zum festen Anordnen und Verschalten einzelner Separationseinheiten (12) und/oder erster Funktionseinheiten (74) untereinander für die Durchführung einer oder mehrerer Grundoperationen in einem bioverfahrenstechnischen Prozess,
wobei die modulare Vorrichtung mehrere Verteilerkappen (14) umfasst, von denen wenigstens eine Verteilerkappe (14) zum Anbringen an einer Separationseinheit (12) und eine oder mehrere weitere Verteilerkappen (14) jeweils zum Anbringen an einer weiteren Separationseinheit (12) oder einer ersten Funktionseinheit (74) vorgesehen sind,
wobei die Verteilerkappen (14) jeweils Folgendes aufweisen:
- eine Fluidverteilereinrichtung mit einem Arbeitsanschluss (28) und wenigstens zwei Zuführ- oder Abführanschlüssen (30), wobei die Fluidverteilereinrichtung wenigstens zwei definierte Schaltstellungen einnehmen kann;
- Anschlussmittel zum Herstellen einer Strömungsverbindung zwischen einem Fluideinlass oder -auslass (34; 34a, 34b) der Separationseinheit (12) oder ersten Funktionseinheit (74) und dem Arbeitsanschluss (28) der Fluidverteilereinrichtung;
- ein Interface zum manuellen oder automatisierten Wechseln der Schaltstellungen der Fluidverteilereinrichtung;
**gekennzeichnet durch** Verbindungsmittel, die sowohl eine starre mechanische Verbindung als auch eine Strömungsverbindung mit einer benachbarten Verteilerkappe (14) herstellen;
wobei ein Verbindungsmittel zwischen einer ersten Verteilerkappe (14) und einer benachbarten zweiten Verteilerkappe (14) nur eine mechanische Verbindung und nur eine Strömungsverbindung herstellt, wobei die eine starre mechanische Verbindung und die eine Strömungsverbindung zwischen einem Zuführ- oder Abführanschluss (30) der Fluidverteilereinrichtung der ersten Verteilerkappe (14) und einem Zuführ- oder Abführanschluss (30) der Fluidverteilereinrichtung der benachbarten zweiten Verteilerkappe (14) herstellen;
wobei bei wenigstens einer Verteilerkappe (14) die Fluidverteilereinrichtung wenigstens ein Mehrwegeventil mit mehreren Ventilstellungen aufweist, mit dem unterschiedliche Strömungsverbindungen zwischen dem Arbeitsanschluss (28) und den Zuführ- oder Abführanschlüssen (30) und/oder zwischen den Zuführ-oder Abführanschlüssen (30) untereinander einstellbar sind;
wobei die Zuführ- bzw. Abführanschlüsse (30) der Fluidverteilereinrichtungen der Verteilerkappen (14) sowohl zum Zuführen als auch Abführen von Fluid geeignet sind und durch entsprechend eingestellte Fluidverteilereinrichtungen verbundene Separationseinheiten (12) der modularen Vorrichtung wahlweise in einer seriellen Verschaltung, parallelen Verschaltung, einer Kombination von serieller und paralleler Verschaltung oder in einer anderen verzweigten Konfiguration betrieben werden können; und
wobei an den Zuführ- oder Abführanschlüssen (30) als Verbindungsmittel dienend Konnektoren (54) oder Schlauchtüllen (62) oder zum Verschließen Blindstopfen (64) angebracht sind.

2. Modulare Vorrichtung nach Anspruch 1, **dadurch gekennzeichnet, dass** die Verteilerkappen (14) Montagemittel (36) zum festen Anbringen der Verteilerkappe (14) an einem Ende eines Gehäuses (18) einer Separationseinheit (12) oder ersten Funktionseinheit (74) umfassen.

3. Modulare Vorrichtung nach einem der vorhergehenden Ansprüche, **dadurch gekennzeichnet, dass** alle oder zumindest eine Menge der Verteilerkappen (14) im Wesentlichen die gleiche Form und die gleiche Größe haben und die Zuführ- oder Abführ-Anschlüsse (30), soweit vorhanden, jeweils an der gleichen Stelle angeordnet sind.

4. Modulare Vorrichtung nach einem der vorhergehenden Ansprüche, **dadurch gekennzeichnet, dass** die Zuführ- oder Abführanschlüsse (30) der Fluidverteilereinrichtung in einer Ebene liegen, die vorzugsweise senkrecht zu einer axialen Richtung des Arbeitsanschlusses (28) orientiert ist.

5. Modulare Vorrichtung nach einem der vorhergehenden Ansprüche, **dadurch gekennzeichnet, dass** die Fluidverteilereinrichtung vier Zuführ- oder Abführanschlüsse (30) aufweist, die in Winkelabständen von 90° angeordnet sind.

6. Modulare Vorrichtung nach einem der vorhergehenden Ansprüche, **dadurch gekennzeichnet, dass** die Verteilerkappen (14) im Wesentlichen die Form eines geraden Zylinders haben, dessen Grund- und Deckfläche im Wesentlichen kreisförmig oder ein gleichwinkliges Polygon, vorzugsweise ein Oktagon, ist.

7. Modulare Vorrichtung nach einem der vorhergehenden Ansprüche, **dadurch gekennzeichnet, dass** das wenigstens eine Ventil ein Kugelventil (38) oder ein Membranventil ist.

8. Modulare Vorrichtung nach einem der vorhergehenden Ansprüche, **dadurch gekennzeichnet, dass** der Arbeitsanschluss (28) bezüglich einer zu seiner axialen Richtung senkrechten Ebene mittig in der Verteilerkappe (14) angeordnet ist.

9. Modulare Vorrichtung nach einem der Ansprüche 1 bis 5, **dadurch gekennzeichnet, dass** bei wenigstens einer Verteilerkappe (14), die zum Anbringen an einer Separationseinheit (12) vorgesehen ist, der Arbeitsanschluss (28) so angeordnet ist, dass er bezüglich eines mittigen Fluidauslasses (34b) der Separationseinheit (12) radial versetzt angeordnet ist, so dass beim Anbringen der Verteilerkappe (14) an der Separationseinheit (12) der Arbeitsanschluss (28) mit einem entsprechend versetzt angeordneten Fluideinlass (34a) der Separationseinheit (12) in Strömungsverbindung gebracht wird.

10. Modulare Vorrichtung nach Anspruch 9, **dadurch gekennzeichnet, dass** das Ventil ein Kugelventil (38) ist, das über eine mittig angeordnete Spindel (50) und ein Kegelradgetriebe (72) in wenigstens zwei verschiedene Ventilstellungen gebracht werden kann.

11. Modulare Vorrichtung nach einem der vorhergehenden Ansprüche, **dadurch gekennzeichnet, dass** die Konnektoren (54) oder Schlauchtüllen (62) oder Blindstopfen (64) jeweils mit einem Sicherungselement (58) fixiert sind, welches vorzugsweise an einem an einem Gehäuse (18) der Verteilerkappe (14) gebildeten Rastmittel einschnappt.

12. Modulare Vorrichtung nach einem der vorhergehenden Ansprüche, **dadurch gekennzeichnet, dass** wenigstens bei einer Verteilerkappe (14) an wenigstens einen der Zuführ- oder Abführanschlüsse (30) eine zweite Funktionseinheit (76) angeschlossen ist.

13. Modulare Vorrichtung nach einem der vorhergehenden Ansprüche, **dadurch gekennzeichnet, dass** an wenigstens einem Arbeitsanschluss (28) oder Zuführ- oder Abführanschluss (30) ein Überdruckschutzmittel, insbesondere eine Berstmembran, angebracht ist, das den entsprechenden Anschluss bei Überschreiten eines Grenzdrucks freigibt.

14. Prozess-Vorrichtungsanordnung (10) für die Durchführung einer oder mehrerer Grundoperationen in einem bioverfahrenstechnischen Prozess, mit wenigstens einer Separationseinheit (12) und wenigstens einer weiteren Separationseinheit (12) und/oder einer ersten Funktionseinheit (74), **gekennzeichnet durch** eine modulare Vorrichtung nach einem der vorhergehenden Ansprüche, mit welcher die Separationseinheit (12) und die weitere Separationseinheit (12) und/oder erste Funktionseinheit (74) relativ zueinander fest angeordnet und untereinander verschaltet sind.

15. Prozess-Vorrichtungsanordnung (10) nach Anspruch 14, **dadurch gekennzeichnet, dass** zur Aufteilung eines großen Mediumvolumens mehrere Zuführ-oder Abführanschlüsse (30) verschiedener Verteilerkappen (14) mit Behältern verbunden sind.

16. Prozess-Vorrichtungsanordnung (10) nach Anspruch 14 oder 15, **dadurch gekennzeichnet, dass** ein Zuführ- oder Abführanschluss (30) oder eine erste Funktionseinheit (74) mit einer Analysemetrik verbunden ist.

17. Prozess-Vorrichtungsanordnung (10) nach einem der Ansprüche 14 bis 16, **dadurch gekennzeichnet, dass** mehrere Untereinheiten (16) mit jeweils einer Separationseinheit (12) oder ersten Funktionseinheit (74) und wenigstens einer Verteilerkappe (14) zu Modulbaugruppen (98) zusammengefasst sind, wobei die Modulbaugruppen (98) übereinander gestapelt sind.

18. Prozess-Vorrichtungsanordnung (10) nach Anspruch 17, **dadurch gekennzeichnet, dass** Strömungsverbindungen zwischen den übereinander gestapelten Modulbaugruppen (98) durch vertikal ausgerichtete, den Arbeitsanschlüssen (28) gegenüberliegende Verbindungsanschlüsse (102) der Fluidverteilereinrichtungen der Verteilerkappen (14) hergestellt sind.

19. Prozess-Vorrichtungsanordnung (10) nach einem der Ansprüche 14 bis 18, **dadurch gekennzeichnet, dass** sowohl die Verteilerkappen (14) als auch alle unmittelbar an den Verteilerkappen (14) angebrachten Einheiten (12, 74, 76) der Prozess-Vorrichtungsanordnung (10) als Einweg-Komponenten konfiguriert sind und vorzugsweise die gesamte Prozess-Vorrichtungsanordnung (10) vor Inbetriebnahme vorsterilisiert ist.

## Claims

1. Modular device for fixedly arranging and interconnecting individual separation units (12) and/or first functional units (74) for performing one or more unit operations in a biotechnological process,
wherein the modular device comprises a plurality of distributor caps (14), of which at least one distributor cap (14) is provided for attachment to a separation unit (12) and one or more further distributor caps (14) are each provided for attachment to a further separation unit (12) or a first functional unit (74),
wherein the distributor caps (14) each comprise the following:
- a fluid distribution means having a work port (28) and at least two supply or discharge ports (30), wherein the fluid distribution means can assume at least two defined switching positions;
- linking means for establishing a flow connection between a fluid inlet or outlet (34; 34a, 34b) of the separation unit (12) or first functional unit (74) and the work port (28) of the fluid distribution means;
- an interface for manually or automatically changing the switching positions of the fluid distribution means;
**characterized by** connecting means which establish both a rigid mechanical connection and a flow connection with an adjacent distributor cap (14);
wherein a connecting means establishes just one mechanical connection and just one flow connection between a first distributor cap (14) and an adjacent second distributor cap (14), wherein the one rigid mechanical connection and the one flow connection are established between a supply or discharge port (30) of the fluid distribution means of the first distributor cap (14) and a supply or discharge port (30) of the fluid distribution means of the adjacent second distributor cap (14);
wherein, in at least one distributor cap (14), the fluid distribution means comprises at least one multi-way valve with a plurality of valve positions, by means of which different flow connections between the work port (28) and the supply or discharge ports (30) and/or between the supply or discharge ports (30) can be set;
wherein the supply or discharge ports (30) of the fluid distribution means of the distributor caps (14) are suitable both for supplying and for discharging fluid and can be operated selectively in a series connection, a parallel connection, a combination of a series and a parallel connection, or in another branched configuration by way of suitably set fluid distribution means of connected separation units (12) of the modular device; and
wherein connectors (54) or hose barbs (62) serving as connecting means or blind plugs (64) for sealing purposes are attached to the supply or discharge ports (30).

2. Modular device according to claim 1, **characterized in that** the distributor caps (14) comprise mounting means (36) for fixedly attaching the distributor cap (14) to an end of a housing (18) of a separation unit (12) or first functional unit (74).

3. Modular device according to any one of the preceding claims, **characterized in that** all or at least a plurality of the distributor caps (14) have substantially the same shape and the same size, and the supply or discharge ports (30), if any, are each arranged at the same location.

4. Modular device according to any one of the preceding claims, **characterized in that** the supply or discharge ports (30) of the fluid distribution means lie in a plane which is preferably oriented perpendicular to an axial direction of the work port (28).

5. Modular device according to any one of the preceding claims, **characterized in that** the fluid distribution means comprises four supply or discharge ports (30) arranged at angular intervals of 90°.

6. Modular device according to any one of the preceding claims, **characterized in that** the distributor caps (14) have substantially the shape of a straight cylinder, the base surface and the top surface of which are substantially circular or are an equiangular polygon, preferably an octagon.

7. Modular device according to any one of the preceding claims, **characterized in that** the at least one valve is a ball valve (38) or a diaphragm valve.

8. Modular device according to any one of the preceding claims, **characterized in that** the work port (28) is arranged centrally in the distributor cap (14) with respect to a plane perpendicular to its axial direction.

9. Modular device according to any one of claims 1 to 5, **characterized in that**, in at least one distributor cap (14) provided for attachment to a separation unit (12), the work port (28) is arranged such that it is arranged radially offset with respect to a central fluid outlet (34b) of the separation unit (12) so that, when the distributor cap (14) is attached to the separation unit (12), the work port (28) is brought into flow connection with a correspondingly offset fluid inlet (34a) of the separation unit (12).

10. Modular device according to claim 9, **characterized in that** the valve is a ball valve (38) which can be brought into at least two different valve positions by way of a centrally arranged spindle (50) and a bevel gear (72).

11. Modular device according to any one of the preceding claims, **characterized in that** the connectors (54) or hose barbs (62) or blind plugs (64) are each fixed to a securing element (58) which preferably snaps onto a latching means formed on a housing (18) of the distributor cap (14).

12. Modular device according to any one of the preceding claims, **characterized in that**, at least in one distributor cap (14), a second functional unit (76) is connected to at least one of the supply or discharge ports (30).

13. Modular device according to any one of the preceding claims, **characterized in that** an overpressure protection means, in particular a bursting diaphragm, is attached to at least one work port (28) or supply or discharge port (30) and opens the port in question when a limit pressure is exceeded.

14. Process device arrangement (10) for performing one or more unit operations in a biotechnological process, comprising at least one separation unit (12) and at least one further separation unit (12) and/or a first functional unit (74), **characterized by** a modular device according to any one of the preceding claims, by means of which the separation unit (12) and the further separation unit (12) and/or first functional unit (74) are arranged fixedly relative to one another and are interconnected.

15. Process device arrangement (10) according to claim 14, **characterized in that** a plurality of supply or discharge ports (30) of different distributor caps (14) are connected to containers for dividing a large volume of medium.

16. Process device arrangement (10) according to claim 14 or 15, **characterized in that** a supply or discharge port (30) or a first functional unit (74) is connected to an analysis metric.

17. Process device arrangement (10) according to any one of claims 14 to 16, **characterized in that** a plurality of subunits (16), each comprising a separation unit (12) or first functional unit (74) and at least one distributor cap (14), are combined to form module assemblies (98), the module assemblies (98) being stacked on top of each other.

18. Process device arrangement (10) according to claim 17, **characterized in that** flow connections between the module assemblies (98) stacked on top of each other are established by way of vertically oriented connecting ports (102), located opposite the work ports (28), of the fluid distribution means of the distributor caps (14).

19. Process device arrangement (10) according to any one of claims 14 to 18, **characterized in that** both the distributor caps (14) and all units (12, 74, 76) of the process device arrangement (10) that are directly attached to the distributor caps (14) are configured as disposable components, and preferably the entire process device arrangement (10) is pre-sterilized before being put into operation.

## Revendications

1. Dispositif modulaire pour la disposition fixe et la connexion d'unités de séparation (12) individuelles et/ou de premières unités fonctionnelles (74) entre elles pour la mise en œuvre d'une ou de plusieurs opérations de base dans un processus biotechnologique,
dans lequel le dispositif modulaire comprend plusieurs capuchons de distributeur (14), dont au moins un capuchon de distributeur (14) à monter sur une unité de séparation (12) et un ou plusieurs autres capuchons de distributeur (14) respectivement à monter sur une autre unité de séparation (12) ou une première unité fonctionnelle (74) sont prévus,
dans lequel les capuchons de distributeur (14) présentent respectivement ce qui suit :
- un système de distribution de fluide avec un raccord de travail (28) et au moins deux raccords d'amenée ou d'évacuation (30), dans lequel le système de distribution de fluide peut occuper au moins deux positions de commutation définies ;
- des moyens de raccordement pour établir une liaison fluidique entre une entrée ou sortie de fluide (34 ; 34a, 34b) de l'unité de séparation (12) ou première unité fonctionnelle (74) et le raccord de travail (28) du système de distribution de fluide ;
- une interface pour le changement manuel ou automatisé des positions de commutation du système de distribution de fluide ;
**caractérisé par** des moyens de liaison, qui établissent aussi bien une liaison mécanique rigide qu'une liaison fluidique avec un capuchon de distributeur (14) adjacent ;
dans lequel un moyen de liaison entre un premier capuchon de distributeur (14) et un deuxième capuchon de distributeur (14) adjacent établit uniquement une liaison mécanique et uniquement une liaison fluidique, dans lequel la une liaison mécanique rigide et la une liaison fluidique sont établies entre un raccord d'amenée ou d'évacuation (30) du système de distribution de fluide du premier capuchon de distributeur (14) et un raccord d'amenée ou d'évacuation (30) du système de distribution de fluide du deuxième capuchon de distributeur (14) adjacent ;
dans lequel pour au moins un capuchon de distributeur (14) le système de distribution de fluide présente au moins une soupape multivoies avec plusieurs positions de soupape, avec laquelle différentes liaisons fluidiques entre le raccord de travail (28) et les raccords d'amenée ou d'évacuation (30) et/ou entre les raccords d'amenée ou d'évacuation (30) entre eux peuvent être réglées ;
dans lequel les raccords d'amenée ou d'évacuation (30) des systèmes de distribution de fluide des capuchons de distributeur (14) sont adaptés aussi bien pour amener que pour évacuer du fluide et des unités de séparation (12) du dispositif modulaire reliées par des systèmes de distribution de fluide réglés de manière correspondante peuvent fonctionner sélectivement dans une connexion en série, connexion en parallèle, une combinaison d'une connexion en série et parallèle ou dans une autre configuration ramifiée ; et
dans lequel des connecteurs (54) ou embouts de tuyau (62) servant de moyens de liaison ou pour la fermeture des bouchons obturateurs (64) sont placés sur les raccords d'amenée ou d'évacuation (30).

2. Dispositif modulaire selon la revendication 1, **caractérisé en ce que** les capuchons de distributeur (14) comprennent des moyens de montage (36) pour le placement fixe du capuchon de distributeur (14) sur une extrémité d'un boîtier (18) d'une unité de séparation (12) ou première unité fonctionnelle (74).

3. Dispositif modulaire selon l'une quelconque des revendications précédentes, **caractérisé en ce que** tous les ou au moins une certaine quantité des capuchons de distributeur (14) ont sensiblement la même forme et la même taille et les raccords d'amenée ou d'évacuation (30), le cas échéant, sont disposés respectivement au même endroit.

4. Dispositif modulaire selon l'une quelconque des revendications précédentes, **caractérisé en ce que** les raccords d'amenée ou d'évacuation (30) du système de distribution de fluide se situent dans un plan qui est orienté de préférence perpendiculairement à une direction axiale du raccord de travail (28).

5. Dispositif modulaire selon l'une quelconque des revendications précédentes, **caractérisé en ce que** le système de distribution de fluide présente quatre raccords d'amenée ou d'évacuation (30), qui sont disposés à intervalles angulaires de 90°.

6. Dispositif modulaire selon l'une quelconque des revendications précédentes, **caractérisé en ce que** les capuchons de distributeur (14) ont sensiblement la forme d'un cylindre droit, dont la surface de base et de recouvrement est sensiblement circulaire ou un polygone équiangle, de préférence un octogone.

7. Dispositif modulaire selon l'une quelconque des revendications précédentes, **caractérisé en ce que** l'au moins une soupape est une soupape sphérique (38) ou une soupape à membrane.

8. Dispositif modulaire selon l'une quelconque des revendications précédentes, **caractérisé en ce que** le raccord de travail (28) est disposé de manière centrale dans le capuchon de distributeur (14) par rapport à un plan perpendiculaire à sa direction axiale.

9. Dispositif modulaire selon l'une quelconque des revendications 1 à 5, **caractérisé en ce que** pour au moins un capuchon de distributeur (14), qui est destiné à être placé sur une unité de séparation (12), le raccord de travail (28) est disposé de sorte qu'il est disposé de manière radialement décalée par rapport à une sortie de fluide (34b) centrale de l'unité de séparation (12), de sorte que lorsque le capuchon de distributeur (14) est placé sur l'unité de séparation (12) le raccord de travail (28) est amené en liaison fluidique avec une entrée de fluide (34a) de l'unité de séparation (12) disposée de façon décalée de manière correspondante.

10. Dispositif modulaire selon la revendication 9, **caractérisé en ce que** la soupape est une soupape sphérique (38), qui peut être amenée dans au moins deux positions de soupape différentes par l'intermédiaire d'une broche (50) disposée de manière centrale et d'une transmission à engrenage conique (72).

11. Dispositif modulaire selon l'une quelconque des revendications précédentes, **caractérisé en ce que** les connecteurs (54) ou embouts de tuyau (62) ou bouchons obturateurs (64) sont fixés respectivement avec un élément de blocage (58), lequel se referme de préférence sur un moyen d'encliquetage formé sur un boîtier (18) du capuchon de distributeur (14).

12. Dispositif modulaire selon l'une quelconque des revendications précédentes, **caractérisé en ce qu'**au moins pour un capuchon de distributeur (14) une deuxième unité fonctionnelle (76) est raccordée à au moins un des raccords d'amenée ou d'évacuation (30).

13. Dispositif modulaire selon l'une quelconque des revendications précédentes, **caractérisé en ce qu'**un moyen de protection contre une surpression, en particulier une membrane d'éclatement, qui libère le raccord correspondant lorsqu'une pression limite est dépassée, est placé sur au moins un raccord de travail (28) ou raccord d'amenée ou d'évacuation (30).

14. Ensemble de dispositif de processus (10) pour la mise en œuvre d'une ou plusieurs opérations de base dans un processus biotechnologique, avec au moins une unité de séparation (12) et au moins une autre unité de séparation (12) et/ou une première unité fonctionnelle (74), **caractérisé par** un dispositif modulaire selon l'une quelconque des revendications précédentes, avec lequel l'unité de séparation (12) et l'autre unité de séparation (12) et/ou première unité fonctionnelle (74) sont disposées fixement les unes par rapport aux autres et connectées entre elles.

15. Ensemble de dispositif de processus (10) selon la revendication 14, **caractérisé en ce que** pour la division d'un grand volume de milieu plusieurs raccords d'amenée ou d'évacuation (30) de différents capuchons de distributeur (14) sont reliés à des contenants.

16. Ensemble de dispositif de processus (10) selon la revendication 14 ou 15, **caractérisé en ce qu'**un raccord d'amenée ou d'évacuation (30) ou une première unité fonctionnelle (74) est relié(e) à une métrique d'analyse.

17. Ensemble de dispositif de processus (10) selon l'une quelconque des revendications 14 à 16, **caractérisé en ce que** plusieurs sous-unités (16) sont réunies avec respectivement une unité de séparation (12) ou première unité fonctionnelle (74) et au moins un capuchon de distributeur (14) en blocs modulaires (98), dans lequel les blocs modulaires (98) sont empilés les uns sur les autres.

18. Ensemble de dispositif de processus (10) selon la revendication 17, **caractérisé en ce que** des liaisons fluidiques entre les blocs modulaires (98) empilés les uns sur les autres sont établies par des raccords de liaison (102) des systèmes de distribution de fluide des capuchons de distributeur (14) orientés verticalement, opposés aux raccords de travail (28).

19. Ensemble de dispositif de processus (10) selon l'une quelconque des revendications 14 à 18, **caractérisé en ce qu'**aussi bien les capuchons de distributeur (14) que toutes les unités (12, 74, 76) de l'ensemble de dispositif de processus (10) placées directement sur les capuchons de distributeur (14) sont configurés en tant que composants à usage unique et de préférence l'ensemble de dispositif de processus (10) est entièrement pré-stérilisé avant la mise en marche.
